# EUROPEAN PATENT APPLICATION

(11) **EP 4 503 713 A1**
(43) Date of publication of application: **05.02.2025**
(21) Application number: 23773855.4
(22) Date of filing: 21.03.2023
(51) Int. Cl.: H04W 24/08

(54) **INFORMATION CONTROL METHOD AND APPARATUS, COMMUNICATION DEVICE, AND STORAGE MEDIUM**

(30) Priority: 25.03.2022 CN 202210307936
(71) Applicant: VIVO MOBILE COMMUNICATION CO., LTD., Dongguan, Guangdong 523863 (CN)
(72) Inventor: KE, Xiaowan, Dongguan, Guangdong 523863 (CN)
(74) Representative: Shieldmark
(86) International application number: PCT/CN2023/082777
(87) International publication number: WO 2023/179608

(57) **Abstract**

Embodiments of the present invention provide an information control method and apparatus, a communication device, and a storage medium. The information control method includes: The first communication device executes a first operation, wherein the first operation includes at least one of the following operations: measuring a data transmission rate; and sending first information. The first information includes at least one of the following: information used for indicating a data transmission rate; a first event; first indication information; second indication information; third indication information; a first event duration; and a second event.

## Description

### CROSS-REFERENCE TO RELATED APPLICATIONS

This application claims priority to Chinese Patent Application No. 202210307936.3, entitled "INFORMATION CONTROL METHOD AND APPARATUS, COMMUNICATION DEVICE, AND STORAGE MEDIUM" filed on March 25, 2022, which is incorporated by reference in its entirety.

### TECHNICAL FIELD

Embodiments of the present invention relate to the field of wireless communication technologies, and in particular, to an information control method and apparatus, a communication device, and a storage medium.

### BACKGROUND

An application server may monitor a data transmission rate of a link to dynamically adjust a throughput rate and encoding and compression efficiency of sent data. In a mobile communication network, during terminal handover or redirection, the data transmission rate of the link may have a data transmission rate decrease or transmission interruption phenomenon. However, the data transmission rate decrease or transmission interruption phenomenon will disappear at the end of handover and redirection. In this case, the decrease in the data transmission rate of the application server or the adjustment of the encoding and compression efficiency may reduce the service rate or be in conductive to energy conservation, which may ultimately reduce the service experience of a user. How to assist an application in correctly monitoring the data transmission rate of the link and a state of the link is a problem that needs to be solved.

### SUMMARY

The embodiments of the present invention provide an information control method and apparatus, a communication device, and a storage medium, to solve the problem of how to assist an application in correctly monitoring a data transmission rate of a link and a state of the link.

To resolve the above technical problems, the present invention is implemented as follows:
In a first aspect, the embodiments of the present invention provide an information control method, applied to a first communication device and including:
The first communication device executes a first operation, wherein the first operation includes at least one of the following operations:
measuring a data transmission rate; and
sending first information;
wherein the first information includes at least one of the following:
   information used for indicating a data transmission rate;
   a first event, including at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
   first indication information, wherein the first indication information is used for indicating beginning or occurrence of the first event;
   second indication information, wherein the second indication information is used for indicating completion of the first event;
   third indication information, wherein the third indication information is used for indicating a failure of the first event;
   a first event duration; and
   a second event, including at least one of the following: a data transmission recovery event, an event in which the data transmission rate is no longer zero, and an event in which connection between a terminal and a network is recovered.

In a second aspect, the embodiments of the present invention provide an information control method, applied to a second communication device and including:
The second communication device executes a second operation, wherein the second operation includes at least one of the following operations:
obtaining first information;
determining second information; and
sending the second information;
wherein
the first information includes at least one of the following:
   information used for indicating a data transmission rate;
   a first event, including at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
   first indication information, wherein the first indication information is used for indicating beginning or occurrence of the first event;
   second indication information, wherein the second indication information is used for indicating completion of the first event;
   third indication information, wherein the third indication information is used for indicating a failure of the first event;
   a first event duration; and
   a second event, including at least one of the following: a data transmission recovery event, an event in which the data transmission rate is no longer zero, and an event in which connection between a terminal and a network is recovered;
   wherein the data transmission rate in the first information is a data transmission rate measured by a first communication device;
   the second information includes at least one of the following:
      information used for indicating a data transmission rate;
      a fifth event, including at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
      seventh indication information, wherein the seventh indication information is used for indicating beginning or occurrence of the fifth event;
      eighth indication information, wherein the eighth indication information is used for indicating completion of the fifth event;
      ninth indication information, wherein the ninth indication information is used for indicating a failure of the fifth event; and
      a fifth event duration; and
      a sixth event, including at least one of the following: a data transmission recovery event, an event in which the data transmission rate is no longer zero, and an event in which connection between a terminal and a network is recovered.

In a third aspect, the embodiments of the present invention provide an information control method, applied to a third communication device and including:
The third communication device executes a fourth operation, wherein the fourth operation includes at least one of the following operations:
sending a first subscription request; and
sending a second subscription request;
wherein the first subscription request includes at least one of the following:
   information of a terminal;
   a data transmission rate of a data flow;
   one or more rate value ranges;
   one or more reporting conditions for triggering reporting of a data transmission rate;
   a reporting event of a data transmission rate, wherein the reporting event includes at least one of the following: occurrence of a first subscription event, completion of the first subscription event, a failure of the first subscription event, and occurrence of a second subscription event;
   a reporting cycle of a data transmission rate;
   a first subscription event;
   a second subscription event; and
   twelfth indication information, used for indicating at least one of the following: in a case that a first event occurs, reporting the first event, the occurrence of the first event, and/or a first event duration; in a case that the first event ends, reporting the end of the first event and/or the first event duration; in a case that the first event fails, reporting a first event failure indication; and in a case that a second event occurs, reporting the second event;
   wherein the first subscription event includes at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
   the second subscription event includes at least one of the following: a data transmission recovery event, an event in which the data transmission rate is no longer zero, and an event in which connection between a terminal and a network is recovered;
   wherein the second subscription request includes at least one of the following: the information of the terminal, description information of the data flow, related subscription information of a predicted data transmission rate, and related subscription information of a predicted event;
   the related subscription information of the predicted data transmission rate includes at least one of the following: a first target time point, a first target time period, a first target region range, a first target location, and information used for indicating: asking to predict a data transmission rate;
   the related subscription information of the predicted event includes at least one of the following: a second target time period, a second target region range, and an event asked to be predicted; and
   the event asked to be predicted includes at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained.

In a fourth aspect, the embodiments of the present invention provide an information control method, applied to a fourth communication device and including:
The fourth communication device obtains a second subscription request, wherein the second subscription request includes at least one of the following: information of a terminal, description information of a data flow, related subscription information of a predicted data transmission rate, and related subscription information of a predicted event;
the related subscription information of the predicted data transmission rate includes at least one of the following: a first target time point, a first target time period, a first target region range, a first target location, and information used for indicating: asking to predict a data transmission rate;
the related subscription information of the predicted event includes at least one of the following: a second target time period, a second target region range, and an event asked to be predicted; and

The fourth communication device executes a fifth operation according to a first subscription request, wherein the fifth operation includes at least one of the following operations:
executing prediction of a data transmission rate;
executing prediction of whether the event asked to be predicted occurs or does not occur;
sending related information of one or more predicted data transmission rates; and
sending related information of one or more events predicted to occur;
the related information of the predicted data transmission rate includes at least one of the following:
   first time;
   a first territory; and
   information used for indicating the predicted data transmission rate;
   wherein the related information of the event predicted to occur includes at least one of the following:
      second time;
      a second address; and
      the event predicted to occur.

In a fifth aspect, the embodiments of the present invention provide an information control method, applied to a fifth communication device and including:
The fifth communication device executes a sixth operation, wherein the sixth operation includes at least one of the following operations:
generating a first monitoring policy; and
sending the first monitoring policy;
wherein
the first monitoring policy includes at least one of the following:
   thirteenth indication information, used for indicating at least one of the following: in a case that a first event occurs, reporting the first event, first indication information, and/or a first event duration; in a case that the first event ends, reporting second indication information and/or the first event duration; in a case that the first event fails, reporting third indication information; and in a case that a second event occurs, reporting the second event;
   fourteenth indication information, used for indicating at least one of the following: reporting first information through a control plane, or reporting the first information through a user plane;
   fifteenth indication information, used for indicating: asking to measure a data transmission rate;
   one or more rate value ranges;
   one or more reporting conditions for triggering reporting of a data transmission rate;
   a reporting event of a data transmission rate, wherein the reporting event includes at least one of the following: the occurrence of the first event, the completion of the first event, the failure of the first event, and the occurrence of the second event; and
   a reporting cycle of a data transmission rate.

In a sixth aspect, the embodiments of the present invention provide an information control method, applied to a sixth communication device and including:
The sixth communication device executes a seventh operation, wherein the seventh operation includes at least one of the following operations:
generating first monitoring requirement information, and/or second monitoring requirement information;
sending the first monitoring requirement information, and/or sending the second monitoring requirement information;
monitoring a seventh event; and
sending the seventh event;
wherein
the seventh event includes at least one of the following: a terminal handover event, a data transmission interruption or rate decrease event, an event in which an IP address of a terminal changes, a terminal handover event in which IP continuity is maintained, a data transmission interruption or rate decrease event in which IP continuity is maintained, a data transmission interruption or rate decrease event caused by terminal handover, and a data transmission interruption or rate decrease event, caused by terminal handover, in which IP continuity is maintained;
wherein
the first monitoring requirement information includes at least one of the following:
   fourth indication information, used for indicating at least one of the following: in a case that a first event occurs, reporting the first event, first indication information, and/or a first event duration; in a case that the first event ends, reporting second indication information and/or the first event duration; in a case that the first event fails, reporting third indication information; and in a case that a second event occurs, reporting the second event;
   fifth indication information, used for indicating at least one of the following: reporting first information through a control plane, or reporting the first information through a user plane;
   sixth indication information, used for indicating: asking to measure a data transmission rate;
   one or more rate value ranges;
   one or more reporting conditions for triggering reporting of a data transmission rate;
   a reporting event of a data transmission rate, wherein the reporting event includes at least one of the following: the occurrence of the first event, the completion of the first event, the failure of the first event, and the occurrence of the second event; and
   a reporting cycle of a data transmission rate;
   wherein
   the second monitoring requirement information includes at least one of the following:
      tenth indication information, used for indicating: asking to measure a data transmission rate;
      one or more reporting triggering conditions for a data transmission rate;
      a reporting event of a data transmission rate, wherein the reporting event includes at least one of the following: the occurrence of the first event, the completion of the first event, the failure of the first event, and the occurrence of the second event;
      a reporting cycle of a data transmission rate;
      an eleventh indication, used for indicating: asking to execute at least one of the following third operations: obtaining the first information, and monitoring the first information sent by a first target terminal; and
      a time period of executing the third operation.

In a seventh aspect, the embodiments of the present invention provide an information control apparatus, applied to a first communication device and including:
a first execution module, configured to execute a first operation, wherein the first operation includes at least one of the following operations:
measuring a data transmission rate; and
sending first information;

The first information includes at least one of the following:
information used for indicating a data transmission rate;
a first event, including at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
first indication information, wherein the first indication information is used for indicating beginning or occurrence of the first event;
second indication information, wherein the second indication information is used for indicating completion of the first event;
third indication information, wherein the third indication information is used for indicating a failure of the first event;
a first event duration; and
a second event, including at least one of the following: a data transmission recovery event, an event in which the data transmission rate is no longer zero, and an event in which connection between a terminal and a network is recovered.

In an eighth aspect, the embodiments of the present invention provide an information control apparatus, applied to a second communication device and including:
a second execution module, configured to execute a second operation, wherein the second operation includes at least one of the following operations:
obtaining first information;
determining second information; and
sending the second information;
wherein
the first information includes at least one of the following:
   information used for indicating a data transmission rate;
   a first event, including at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
   first indication information, wherein the first indication information is used for indicating beginning or occurrence of the first event;
   second indication information, wherein the second indication information is used for indicating completion of the first event;
   third indication information, wherein the third indication information is used for indicating a failure of the first event;
   a first event duration; and
   a second event, including at least one of the following: a data transmission recovery event, an event in which the data transmission rate is no longer zero, and an event in which connection between a terminal and a network is recovered;
   wherein the data transmission rate in the first information is a data transmission rate measured by a first communication device;
   the second information includes at least one of the following:
      information used for indicating a data transmission rate;
      a fifth event, including at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
      seventh indication information, wherein the seventh indication information is used for indicating beginning or occurrence of the fifth event;
      eighth indication information, wherein the eighth indication information is used for indicating completion of the fifth event;
      ninth indication information, wherein the ninth indication information is used for indicating a failure of the fifth event; and
      a fifth event duration; and
      a sixth event, including at least one of the following: a data transmission recovery event, an event in which the data transmission rate is no longer zero, and an event in which connection between a terminal and a network is recovered.

In a ninth aspect, the embodiments of the present invention provide an information control apparatus, applied to a third communication device and including:
a third execution module, configured to execute a fourth operation, wherein the fourth operation includes at least one of the following operations:
sending a first subscription request; and
sending a second subscription request;
wherein the first subscription request includes at least one of the following:
   information of a terminal;
   a data transmission rate of a data flow;
   one or more rate value ranges;
   one or more reporting conditions for triggering reporting of a data transmission rate;
   a reporting event of a data transmission rate, wherein the reporting event includes at least one of the following: occurrence of a first subscription event, completion of the first subscription event, a failure of the first subscription event, and occurrence of a second subscription event;
   a reporting cycle of a data transmission rate;
   a first subscription event;
   a second subscription event; and
   twelfth indication information, used for indicating at least one of the following: in a case that a first event occurs, reporting the first event, the occurrence of the first event, and/or a first event duration; in a case that the first event ends, reporting the end of the first event and/or the first event duration; in a case that the first event fails, reporting a first event failure indication; and in a case that the second event occurs, reporting the second event;
   wherein the first subscription event includes at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
   the second subscription event includes at least one of the following: a data transmission recovery event, an event in which the data transmission rate is no longer zero, and an event in which connection between a terminal and a network is recovered;
   wherein the second subscription request includes at least one of the following: the information of the terminal, description information of the data flow, related subscription information of a predicted data transmission rate, and related subscription information of a predicted event;
   the related subscription information of the predicted data transmission rate includes at least one of the following: a first target time point, a first target time period, a first target region range, a first target location, and information used for indicating: asking to predict a data transmission rate;
   the related subscription information of the predicted event includes at least one of the following: a second target time period, a second target region range, and an event asked to be predicted; and
   the event asked to be predicted includes at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained.

In a tenth aspect, the embodiments of the present invention an information control apparatus, applied to a fourth communication device and including:
an obtaining module, configured to obtain a second subscription request, wherein the second subscription request includes at least one of the following: information of a terminal, description information of a data flow, related subscription information of a predicted data transmission rate, and related subscription information of a predicted event;
the related subscription information of the predicted data transmission rate includes at least one of the following: a first target time point, a first target time period, a first target region range, a first target location, and information used for indicating: asking to predict a data transmission rate;
the related subscription information of the predicted event includes at least one of the following: a second target time period, a second target region range, and an event asked to be predicted; and
a fourth execution module, configured to execute a fifth operation according to a first subscription request, wherein the fifth operation includes at least one of the following operations:
   executing prediction of a data transmission rate;
   executing prediction of whether the event asked to be predicted occurs or does not occur;
   sending related information of one or more predicted data transmission rates; and
   sending related information of one or more events predicted to occur;
   the related information of the predicted data transmission rate includes at least one of the following:
      first time;
      a first territory; and
      information used for indicating the predicted data transmission rate;
      wherein the related information of the event predicted to occur includes at least one of the following:
         second time;
         a second address; and
         the event predicted to occur.

In an eleventh aspect, the embodiments of the present invention an information control apparatus, applied to a fifth communication device and including:
a fifth execution module, configured to execute a sixth operation, wherein the sixth operation includes at least one of the following operations:
generating a first monitoring policy; and
sending the first monitoring policy;
wherein
the first monitoring policy includes at least one of the following:
   thirteenth indication information, used for indicating at least one of the following: in a case that a first event occurs, reporting the first event, first indication information, and/or a first event duration; in a case that the first event ends, reporting second indication information and/or the first event duration; in a case that the first event fails, reporting third indication information; and in a case that a second event occurs, reporting the second event;
   fourteenth indication information, used for indicating at least one of the following: reporting first information through a control plane, or reporting the first information through a user plane;
   fifteenth indication information, used for indicating: asking to measure a data transmission rate;
   one or more rate value ranges;
   one or more reporting conditions for triggering reporting of a data transmission rate;
   a reporting event of a data transmission rate, wherein the reporting event includes at least one of the following: the occurrence of the first event, the completion of the first event, the failure of the first event, and the occurrence of the second event;
   a reporting cycle of a data transmission rate.

In a twelfth aspect, the embodiments of the present invention an information control apparatus, applied to a sixth communication device and including:
a sixth execution module, configured to execute a seventh operation, wherein the seventh operation includes at least one of the following operations:
generating first monitoring requirement information, and/or second monitoring requirement information;
sending the first monitoring requirement information, and/or sending the second monitoring requirement information;
monitoring a seventh event; and
sending the seventh event;
wherein
the seventh event includes at least one of the following: a terminal handover event, a data transmission interruption or rate decrease event, an event in which an IP address of a terminal changes, a terminal handover event in which IP continuity is maintained, a data transmission interruption or rate decrease event in which IP continuity is maintained, a data transmission interruption or rate decrease event caused by terminal handover, and a data transmission interruption or rate decrease event, caused by terminal handover, in which IP continuity is maintained;
wherein
the first monitoring requirement information includes at least one of the following:
   fourth indication information, used for indicating at least one of the following: in a case that the first event occurs, reporting the first event, the first indication information, and/or the first event duration; in a case that the first event ends, reporting the second indication information and/or the first event duration; in a case that the first event fails, reporting the third indication information; and in a case that the second event occurs, reporting the second event;
   fifth indication information, used for indicating at least one of the following: reporting the first information through a control plane, or reporting the first information through a user plane;
   sixth indication information, used for indicating: asking to measure a data transmission rate;
   one or more rate value ranges;
   one or more reporting conditions for triggering reporting of a data transmission rate;
   a reporting event of a data transmission rate, wherein the reporting event includes at least one of the following: the occurrence of the first event, the completion of the first event, the failure of the first event, and the occurrence of the second event;
   a reporting cycle of a data transmission rate;
   wherein
   the second monitoring requirement information includes at least one of the following:
      tenth indication information, used for indicating: asking to measure a data transmission rate;
      one or more reporting triggering conditions for a data transmission rate;
      a reporting event of a data transmission rate, wherein the reporting event includes at least one of the following: the occurrence of the first event, the completion of the first event, the failure of the first event, and the occurrence of the second event;
      a reporting cycle of a data transmission rate;
      an eleventh indication, used for indicating: asking to execute at least one of the following third operations: obtaining the first information, and monitoring the first information sent by a first target terminal; and
      a time period of executing the third operation.

In a thirteenth aspect, the embodiments of the present invention provide a first communication device. The first communication device includes a processor and a memory. The memory stores programs or instructions runnable or executable on the processor, and the programs or instructions, when run or executed by the processor, implement the steps of the method as described in the first aspect.

In a fourteenth aspect, the embodiments of the present invention provide a first communication device, including a processor and a communication interface. The processor is configured to execute a first operation, and the first operation includes at least one of the following operations:
measuring a data transmission rate; and
sending first information;
The first information includes at least one of the following:
   information used for indicating a data transmission rate;
   a first event, including at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
   first indication information, wherein the first indication information is used for indicating beginning or occurrence of the first event;
   second indication information, wherein the second indication information is used for indicating completion of the first event;
   third indication information, wherein the third indication information is used for indicating a failure of the first event;
   a first event duration; and
   a second event, including at least one of the following: a data transmission recovery event, an event in which the data transmission rate is no longer zero, and an event in which connection between a terminal and a network is recovered.

In a fifteenth aspect, the embodiments of the present invention provide a second communication device. The second communication device includes a processor and a memory. The memory stores programs or instructions runnable or executable on the processor, and the programs or instructions, when run or executed by the processor, implement the steps of the method as described in the second aspect.

In a sixteenth aspect, the embodiments of the present invention provide a second communication device, including a processor and a communication interface. The processor is configured to execute a second operation, and the second operation includes at least one of the following operations:
obtaining first information;
determining second information; and
sending the second information;
wherein
the first information includes at least one of the following:
   information used for indicating a data transmission rate;
   a first event, including at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
   first indication information, wherein the first indication information is used for indicating beginning or occurrence of the first event;
   second indication information, wherein the second indication information is used for indicating completion of the first event;
   third indication information, wherein the third indication information is used for indicating a failure of the first event;
   a first event duration; and
   a second event, including at least one of the following: a data transmission recovery event, an event in which the data transmission rate is no longer zero, and an event in which connection between a terminal and a network is recovered;
   wherein the data transmission rate in the first information is a data transmission rate measured by a first communication device;
   the second information includes at least one of the following:
      information used for indicating a data transmission rate;
      a fifth event, including at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
      seventh indication information, wherein the seventh indication information is used for indicating beginning or occurrence of the fifth event;
      eighth indication information, wherein the eighth indication information is used for indicating completion of the fifth event;
      ninth indication information, wherein the ninth indication information is used for indicating a failure of the fifth event; and
      a fifth event duration; and
      a sixth event, including at least one of the following: a data transmission recovery event, an event in which the data transmission rate is no longer zero, and an event in which connection between a terminal and a network is recovered.
      In a seventeenth aspect, the embodiments of the present invention provide a third communication device. The third communication device includes a processor and a memory. The memory stores programs or instructions runnable or executable on the processor, and the programs or instructions, when run or executed by the processor, implement the steps of the method as described in the third aspect.

In an eighteenth aspect, the embodiments of the present invention provide a third communication device, including a processor and a communication interface. The processor is configured to execute a fourth operation, and the fourth operation includes at least one of the following operations:
sending a first subscription request; and
sending a second subscription request;
wherein the first subscription request includes at least one of the following:
   information of a terminal;
   a data transmission rate of a data flow;
   one or more rate value ranges;
   one or more reporting conditions for triggering reporting of a data transmission rate;
   a reporting event of a data transmission rate, wherein the reporting event includes at least one of the following: occurrence of a first subscription event, completion of the first subscription event, a failure of the first subscription event, and occurrence of a second subscription event;
   a reporting cycle of a data transmission rate;
   a first subscription event;
   a second subscription event; and
   twelfth indication information, used for indicating at least one of the following: in a case that a first event occurs, reporting the first event, the occurrence of the first event, and/or a first event duration; in a case that the first event ends, reporting the end of the first event and/or the first event duration; in a case that the first event fails, reporting a first event failure indication; and in a case that the second event occurs, reporting the second event;
   wherein the first subscription event includes at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
   the second subscription event includes at least one of the following: a data transmission recovery event, an event in which the data transmission rate is no longer zero, and an event in which connection between a terminal and a network is recovered;
   wherein the second subscription request includes at least one of the following: the information of the terminal, description information of the data flow, related subscription information of a predicted data transmission rate, and related subscription information of a predicted event;
   the related subscription information of the predicted data transmission rate includes at least one of the following: a first target time point, a first target time period, a first target region range, a first target location, and information used for indicating: asking to predict a data transmission rate;
   the related subscription information of the predicted event includes at least one of the following: a second target time period, a second target region range, and an event asked to be predicted; and
   the event asked to be predicted includes at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained.

In a nineteenth aspect, the embodiments of the present invention provide a fourth communication device. The fourth communication device includes a processor and a memory. The memory stores programs or instructions runnable or executable on the processor, and the programs or instructions, when run or executed by the processor, implement the steps of the method as described in the fourth aspect.

In a twentieth aspect, the embodiments of the present invention provide a fourth communication device, including a processor and a communication interface. The communication interface is configured to obtain a second subscription request, and the second subscription request includes at least one of the following: information of a terminal, description information of a data flow, related subscription information of a predicted data transmission rate, and related subscription information of a predicted event;
the related subscription information of the predicted data transmission rate includes at least one of the following: a first target time point, a first target time period, a first target region range, a first target location, and information used for indicating: asking to predict a data transmission rate;
the related subscription information of the predicted event includes at least one of the following: a second target time period, a second target region range, and an event asked to be predicted; and
the processor is configured to execute a fifth operation according to a first subscription request, wherein the fifth operation includes at least one of the following operations:
   executing prediction of a data transmission rate;
   executing prediction of whether the event asked to be predicted occurs or does not occur;
   sending related information of one or more predicted data transmission rates; and
   sending related information of one or more events predicted to occur;
   the related information of the predicted data transmission rate includes at least one of the following:
      first time;
      a first territory; and
      information used for indicating the predicted data transmission rate;
      wherein the related information of the event predicted to occur includes at least one of the following:
         second time;
         a second address; and
         the event predicted to occur.

In a twenty-first aspect, the embodiments of the present invention provide a fifth communication device. The fifth communication device includes a processor and a memory. The memory stores programs or instructions runnable or executable on the processor, and the programs or instructions, when run or executed by the processor, implement the steps of the method as described in the fifth aspect.

In a twenty-second aspect, the embodiments of the present invention provide a fifth communication device, including a processor and a communication interface. The processor is configured to execute a sixth operation, and the sixth operation includes at least one of the following operations:
generating a first monitoring policy; and
sending the first monitoring policy;
wherein
the first monitoring policy includes at least one of the following:
   thirteenth indication information, used for indicating at least one of the following: in a case that a first event occurs, reporting the first event, first indication information, and/or a first event duration; in a case that the first event ends, reporting second indication information and/or the first event duration; in a case that the first event fails, reporting third indication information; and in a case that a second event occurs, reporting the second event;
   fourteenth indication information, used for indicating at least one of the following: reporting first information through a control plane, or reporting the first information through a user plane;
   fifteenth indication information, used for indicating: asking to measure a data transmission rate;
   one or more rate value ranges;
   one or more reporting conditions for triggering reporting of a data transmission rate;
   a reporting event of a data transmission rate, wherein the reporting event includes at least one of the following: the occurrence of the first event, the completion of the first event, the failure of the first event, and the occurrence of the second event; and
   a reporting cycle of a data transmission rate.

In a twenty-third aspect, the embodiments of the present invention provide a sixth communication device. The sixth communication device includes a processor and a memory. The memory stores programs or instructions runnable or executable on the processor, and the programs or instructions, when run or executed by the processor, implement the steps of the method as described in the sixth aspect.

In a twenty-fourth aspect, the embodiments of the present invention provide a sixth communication device, including a processor and a communication interface. The processor is configured to execute a seventh operation, and the seventh operation includes at least one of the following operations:
generating first monitoring requirement information, and/or second monitoring requirement information;
sending the first monitoring requirement information, and/or sending the second monitoring requirement information;
monitoring a seventh event; and
sending the seventh event;
wherein
the seventh event includes at least one of the following: a terminal handover event, a data transmission interruption or rate decrease event, an event in which an IP address of a terminal changes, a terminal handover event in which IP continuity is maintained, a data transmission interruption or rate decrease event in which IP continuity is maintained, a data transmission interruption or rate decrease event caused by terminal handover, and a data transmission interruption or rate decrease event, caused by terminal handover, in which IP continuity is maintained;
wherein
the first monitoring requirement information includes at least one of the following:
   fourth indication information, used for indicating at least one of the following: in a case that a first event occurs, reporting the first event, first indication information, and/or a first event duration; in a case that the first event ends, reporting second indication information and/or the first event duration; in a case that the first event fails, reporting third indication information; and in a case that a second event occurs, reporting the second event;
   fifth indication information, used for indicating at least one of the following: reporting first information through a control plane, or reporting the first information through a user plane;
   sixth indication information, used for indicating: asking to measure a data transmission rate;
   one or more rate value ranges;
   one or more reporting conditions for triggering reporting of a data transmission rate;
   a reporting event of a data transmission rate, wherein the reporting event includes at least one of the following: the occurrence of the first event, the completion of the first event, the failure of the first event, and the occurrence of the second event; and
   a reporting cycle of a data transmission rate;
   wherein
   the second monitoring requirement information includes at least one of the following:
      tenth indication information, used for indicating: asking to measure a data transmission rate;
      one or more reporting triggering conditions for a data transmission rate;
      a reporting event of a data transmission rate, wherein the reporting event includes at least one of the following: the occurrence of the first event, the completion of the first event, the failure of the first event, and the occurrence of the second event;
      a reporting cycle of a data transmission rate;
      an eleventh indication, used for indicating: asking to execute at least one of the following third operations: obtaining the first information, and monitoring the first information sent by a first target terminal; and
      a time period of executing the third operation.

In a twenty-fifth aspect, the embodiments of the present invention provide an information control system, including: a first communication device, a second communication device, a third communication device, a fourth communication device, a fifth communication device, and a sixth communication device. The first communication device may be configured to execute the steps of the information control method as described in the first aspect; the second communication device may be configured to execute the steps of the information control method as described in the second aspect; the third communication device may be configured to execute the steps of the information control method as described in the third aspect; the fourth communication device may be configured to execute the steps of the information control method as described in the fourth aspect; the fifth communication device may be configured to execute the steps of the information control method as described in the fifth aspect; and the sixth communication device may be configured to execute the steps of the information control method as described in the sixth aspect.

In a twenty-sixth aspect, the embodiments of the preset invention provide a readable-storage medium, having programs or instructions stored thereon. The programs or instructions, when run or executed by a processor, implement the steps of the method as described in the first aspect, or implement the steps of the method as described in the second aspect, or implement the steps of the method as described in the third aspect, or implement the steps of the method as described in the fourth aspect, or implement the steps of the method as described in the fifth aspect, or implement the steps of the method as described in the sixth aspect.

In a twenty-seventh aspect, a chip is provided. The chip includes a processor and a communication interface; the communication interface is coupled to the processor; and the processor is configured to run or execute programs or instructions to implement the steps of the method as described in the first aspect, or implement the steps of the method as described in the second aspect, or implement the steps of the method as described in the third aspect, or implement the steps of the method as described in the fourth aspect, or implement the steps of the method as described in the fifth aspect, or implement the steps of the method as described in the sixth aspect.

In a twenty-eighth aspect, the embodiments of the preset invention provide a computer program/program product, stored in a storage medium. The computer program/program product is run by at least one processor to implement the steps of the method as described in the first aspect, or implement the steps of the method as described in the second aspect, or implement the steps of the method as described in the third aspect, or implement the steps of the method as described in the fourth aspect, or implement the steps of the method as described in the fifth aspect, or implement the steps of the method as described in the sixth aspect.

In the embodiments of the present invention, an application server can determine whether to adjust the throughput rate and/or encoding efficiency of sent data and ensure the service experience of a user.

### BRIEF DESCRIPTION OF THE DRAWINGS

Various other advantages and benefits become clear to a person of ordinary skill in the art by reading the following detailed description of exemplary implementations. The accompanying drawings are only for the purpose of illustrating preferred implementations and are not considered as a limitation on the present invention. Throughout the accompanying drawings, the same reference numerals are used to represent the same components. In the accompanying drawings:
FIG. 1 is a schematic architectural diagram of a wireless communication system according to an embodiment of the present invention;
FIG. 2 is a flowchart I of an information control method according to an embodiment of the present invention;
FIG. 3 is a flowchart II of an information control method according to an embodiment of the present invention;
FIG. 4 is a flowchart III of an information control method according to an embodiment of the present invention;
FIG. 5 is a flowchart IV of an information control method according to an embodiment of the present invention;
FIG. 6 is a flowchart V of an information control method according to an embodiment of the present invention;
FIG. 7 is a flowchart VI of an information control method according to an embodiment of the present invention;
FIG. 8 is a schematic diagram I of implementation of an information control method according to an embodiment of the present invention;
FIG. 9 is a schematic diagram II of implementation of an information control method according to an embodiment of the present invention;
FIG. 10 is a schematic diagram III of implementation of an information control method according to an embodiment of the present invention;
FIG. 11 is a schematic diagram IVs of implementation of an information control method according to an embodiment of the present invention;
FIG. 12 is a schematic diagram V of implementation of an information control method according to an embodiment of the present invention;
FIG. 13 is a schematic diagram VI of implementation of an information control method according to an embodiment of the present invention;
FIG. 14 is a schematic structural diagram I of an information control apparatus according to an embodiment of the present invention;
FIG. 15 is a schematic structural diagram II of an information control apparatus according to an embodiment of the present invention;
FIG. 16 is a schematic structural diagram III of an information control apparatus according to an embodiment of the present invention;
FIG. 17 is a schematic structural diagram IV of an information control apparatus according to an embodiment of the present invention;
FIG. 18 is a schematic structural diagram V of an information control apparatus according to an embodiment of the present invention;
FIG. 19 is a schematic structural diagram VI of an information control apparatus according to an embodiment of the present invention;
FIG. 20 is a schematic structural diagram of a communication device according to an embodiment of the present invention;
FIG. 21 is a schematic structural diagram of a first communication device according to an embodiment of the present invention;
FIG. 22 is a schematic structural diagram of a second communication device according to an embodiment of the present invention;
FIG. 23 is a schematic structural diagram of a third communication device according to an embodiment of the present invention;
FIG. 24 is a schematic structural diagram of a fourth communication device according to an embodiment of the present invention;
FIG. 25 is a schematic structural diagram of a fifth communication device according to an embodiment of the present invention; and
FIG. 26 is a schematic structural diagram of a sixth communication device according to an embodiment of the present invention.

### DETAILED DESCRIPTION

The following clearly and completely describes the technical solutions in the embodiments of the present disclosure with reference to the accompanying drawings in the embodiments of the present disclosure. Apparently, the described embodiments are some of the embodiments of the present disclosure rather than all of the embodiments. All other embodiments obtained by a person of ordinary skill in the art based on the embodiments of the present invention without creative efforts shall fall within the protection scope of the present invention.

In the specification and claims of the present invention, the term "include" and any variants thereof are intended to cover a non-exclusive inclusion. For example, a process, method, system, product, or device that includes a series of steps or units is not necessarily limited to those steps or units that are clearly listed, but may include other steps or units not clearly listed or inherent to such a process, method, product, or device. In addition, the term "and/or" used in the specification and claims represent at least one of the connected objects. For example, A and/or B may represent the following three cases: Only A exists, only B exists, and both A and B exist.

In the embodiments of the present invention, the word such as "exemplary" or "for example" is used for meaning serving as an example, an illustration, or a description. Any embodiment or design scheme described as "exemplary" or "for example" in the embodiments of the present invention should not be construed as being preferred or superior to other embodiments or design schemes. To be specific, the terms such as "exemplary" or "for example" as used herein are intended to present the related concept in a specific implementation.

The technologies described in the present disclosure are not limited to the fifth-generation mobile communication (5th-generation, 5G) system and an evolution-advanced communication system, is not limited to the LTE/LTE-advanced (LTE-Advanced, LTE-A) system, and may further be applied to various wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single Carrier Frequency Division Multiple Access (Single Carrier Frequency Division Multiple Access, SC-FDMA), and other systems.

The terms "system" and "network" may usually be used interchangeably. A CDMA system can implement radio technologies such as CDMA2000 and Universal Terrestrial Radio Access (Universal Terrestrial Radio Access, UTRA). UTRA includes broadband CDMA (Wideband Code Division Multiple Access, WCDMA) and other CDMA variants. A TDMA system can implement radio technologies such as Global System for Mobile Communications (Global System for Mobile Communication, GSM). An OFDMA system can implement radio technologies such as Ultra Mobile Broadband (Ultra Mobile Broadband, UMB), evolved UTRA (Evolved-UTRA, E-UTRA), IEEE 802.11 ((Wi-Fi)), IEEE 802.16 ((WiMAX)), IEEE 802.20, and Flash-OFDMA. UTRA and E-UTRA are parts of a universal mobile telecommunications system (Universal Mobile Telecommunications System, UMTS). LTE and LTE-advanced (for example, LTE-A) are new releases of UMTS using E-UTRA. UTRA, E-UTRA, UMTS, LTE, LTE-A, and GSM are described in documents of an organization named "3rd Generation Partnership Project" (3rd Generation Partnership Project, 3GPP). CDMA2000 and UMB are described in documents of an organization named "3rd Generation Partnership Project 2" (3GPP2). The technology described in the present disclosure can be applied to the systems and radio technologies mentioned above, and can alternatively be applied to other systems and radio technologies.

In order to facilitate a better understanding of the embodiments of the present invention, the following technical points will be introduced first.

A service server may generally monitor changes in a bandwidth of a transmission link to dynamically adjust the throughput rate of sending data or increase the compression ratio. A mobile communication network is an important link in the transmission chain. When a terminal moves, the terminal will be redirected between cells to find a better cell to serve for the terminal. A source cell and a target cell can belong to the same RAN or different RANs. In a case that the terminal is handed over or redirected, data transmission interruption may occur (DAPS is not supported), but the data transmission will be recovered after the handover or redirection is completed. Such a data transmission interruption or rate decrease event is brief and normal, and the service server does not need to adjust the throughput rate of the data or increase the compression ratio. During handover that supports DAPS, although the data transmission is not interrupted, the data transmission rate will decrease. The data transmission rate will be recovered after the handover or redirection is completed. Such a data transmission rate decrease event is brief and normal too, and the service server does not need to adjust the throughput rate of the data or increase the compression ratio.

Problem 1: An application server may monitor a data transmission rate of a link to dynamically adjust a throughput rate and encoding and compression efficiency of sent data. In a mobile communication network, during terminal handover or redirection, the data transmission rate of the link may have a data transmission rate decrease or transmission interruption phenomenon. However, the data transmission rate decrease or transmission interruption phenomenon will disappear at the end of handover and redirection. In this case, the decrease in the data transmission rate of the application server or the adjustment of the encoding and compression efficiency may reduce the service rate or be in conductive to energy conservation, which may ultimately reduce the service experience of a user. How to assist an application in correctly monitoring the data transmission rate of the link and a state of the link is a problem that needs to be solved.

Whether an IP address is changed may affect a service link. In a handover process, the IP address of a terminal remains unchanged or can be changed. In a scenario where the IP changes, an application or a service may or may not be interrupted. In this case, the change of the IP can be reported. An application server can determine whether the application or service may or may not be interrupted and then determine the next step.

In an implementation, handover and redirection in a RAN generally do not cause a gateway to change. If the gateway remains unchanged, the IP address of the terminal remains unchanged. Handover between RsANs may cause a gateway to change. After the gateway changes, the IP continuity may not be maintained. An anchor gateway (e.g. a UPF) or an SMF can determine whether the IP of a terminal changes.

Handover may cause data transmission interruption, or may not cause data transmission interruption (e.g. supporting the DAPS). In this case, a terminal transfer event that does not cause data transmission interruption will not be reported. It is easy to understand that since handover has no impact on a service link, the application server may not do anything at this time.

The data transmission during the handover is not interrupted (e.g. supporting DAPS), but the rate may decrease. At this point, a terminal transfer event that causes data transmission rate decrease can be reported. Since this is a short-term process, the application server may not reduce the transmission throughput rate or change the encoding efficiency at this time.

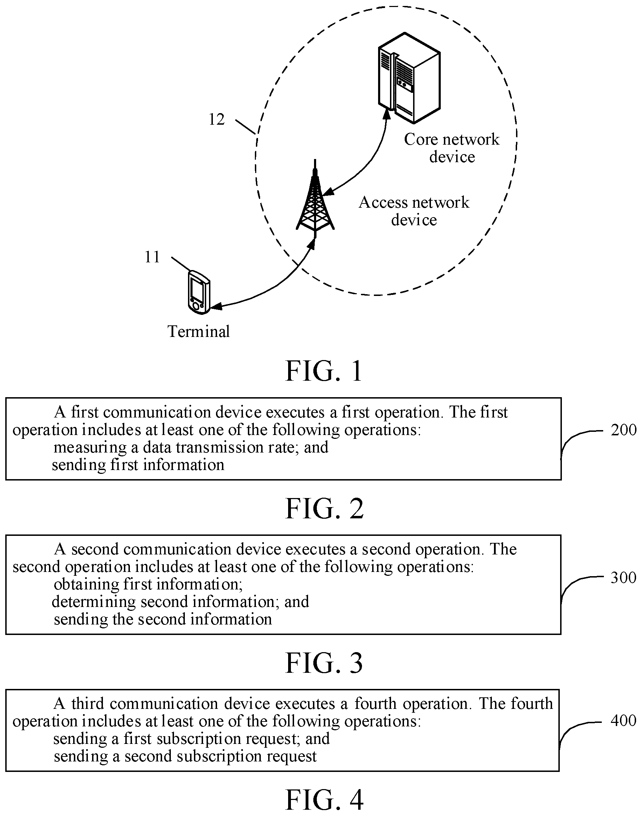

Referring to FIG. 1, it is a schematic architectural diagram of a wireless communication system according to an embodiment of the present invention.

FIG. 1 shows a block diagram of a wireless communication system applicable to an embodiment of the present invention. The wireless communication system includes a terminal 11 and a network side device 12. The terminal 11 can be a mobile phone, a tablet personal computer (Tablet Personal Computer), a laptop computer (Laptop Computer) or alternatively referred to as a laptop, a personal digital assistant (Personal Digital Assistant, PDA), a handheld computer, a netbook, ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home (home devices with wireless communication functions, such as a refrigerator, a television, a washing machine, or furniture), a game console, a personal computer (personal computer, PC), a teller machine, a vending machine, or other terminal side devices. The wearable device includes: a smart watch, a smart hand ring, a smart headphone, smart glasses, a smart jewelry (a smart bracelet, a smart ring, a smart necklace, a smart bangle, a smart anklet, and the like), a smart wristband, smart clothing, and the like. It should be noted, in the embodiments of the present invention, a specific type of the terminal 11 is not limited. The network side device 12 may include an access network device or a core network device. The access network device 12 may alternatively be referred to as a radio access network device, a Radio Access Network (Radio Access Network, RAN), a radio access network function, or a radio access network unit. The radio access network device 12 can include a base station, a WLAN access point, a WiFi node, or the like. The base station can be referred to as a node B, an evolution node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolution type B node, a transmitting receiving point (Transmitting Receiving Point, TRP), or any other suitable term in the art, as long as the same technical effects are achieved. The base station is not limited to a particular technical vocabulary. It should be noted that, in the embodiments of the present invention, only the base station in the NR system is taken as an example, but a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (NEF), a local NEF (Local NEF, or L-NEF), a binding support function (Binding Support Function, BSF), an application function (Application Function, AF), and the like. It should be noted, in the embodiments of the present invention, only the core network device in the NR system is taken as an example for introduction, but a specific type of the core network device is not limited.

Optionally, obtaining can be understood as obtaining from configuration, receiving, receiving after a request succeeds, obtaining through self-learning, obtaining through derivation according to unreceived information, or obtaining after processing received information. This will be specifically determined according to an actual need. The embodiments of the present invention do not impose any limitations on this. For example, when indication information of a capability sent by a device is not received, it can be inferred that the device does not support the capability.

Optionally, sending can include broadcasting, broadcasting in a system message, and returning after making a response to a request.

In an optional embodiment of the present invention, a communication device may include at least one of the following: a communication network element and a terminal.

In an embodiment of the present invention, a communication network element may include at least one of the following: a core network element and a radio access network element.

In the embodiments of the present invention, the core network element (CN element) may include, but is not limited to, at least one of the following: a core network device, a core network node, a core network function, a core network element, a mobility management entity (Mobility Management Entity, MME), an access management function (Access Management Function, AMF), a session management function (Session Management Function, SMF), a user plane function (User Plane Function, UPF), a serving GW (Serving GW, SGW), a PDN gateway (PDN Gate Way, PDN Gateway), a policy control function (Policy Control Function, PCF), a policy and charging rules function (Policy and Charging Rules Function, PCRF), a serving GPRS support node (Serving GPRS Support Node, SGSN), a gateway GPRS support node (Gateway GPRS Support Node, GGSN), and an application function (Application Function).

In the embodiments of the present invention, the RAN element may include, but is not limited to, at least one of the following: a radio access network device, a radio access network node, a radio access network function, a radio access network unit, a 3GPP radio access network, a non-3GPP radio access networks, a centralized unit (Centralized Unit, CU), a distributed unit (Distributed Unit, DU), a base station, an evolved Node B (evolved Node B, eNB), a 5Gbase station (gNB), a radio network controller (Radio Network Controller, RNC), a base station (NodeB), a non-3GPP inter working function (Non-3GPP Inter Working Function, N3IWF), an access controller (Access Controller, AC) node, an access point (Access Point, AP) device or a wireless local area network (Wireless Local Area Networks, WLAN) node, an N3IWF.

A base station may be a base transceiver station (Base Transceiver Station, BTS) in the GSM or CDMA, or may be a NodeB (NodeB) in the WCDMA, or may be an evolved NodeB (eNB or e-NodeB, evolutional Node B) in LTE and a 5G base station (gNB). The embodiments do not limit this.

In an optional embodiment of the present invention, the terminal may include a relay that supports terminal functions and/or a terminal that supports relay functions. The terminal may alternatively be a terminal device or a user equipment (User Equipment, UE). The terminal may be a terminal-side device, such as a mobile phone, a tablet personal computer (Tablet Personal Computer), a laptop computer (Laptop Computer), a personal digital assistant (Personal Digital Assistant, PDA), a mobile Internet device (Mobile Internet Device, MID), a wearable device (Wearable Device), or an in-vehicle device. It should be noted that, the specific type of the terminal is not limited in the embodiments of the present invention.

In an optional embodiment of the present invention, data transmission interruption may alternatively be referred to as zero data transmission rate. The data transmission interruption event may alternatively be referred to as a zero transmission rate event.

In an optional embodiment of the present invention, a reporting condition is a condition that triggers the reporting.

In an optional embodiment of the present invention, the nth time includes at least one of the following: an nth time point and an nth time segment.

In an optional embodiment of the present invention, the nth address includes at least one of the following: an nth region and an nth location.

In an optional embodiment of the present invention, maintaining IP continuity includes keeping an IP address unchanged, for example, keeping the IP address of the terminal unchanged and keeping the IP address of a session of the terminal unchanged. As the IP address does not change, an IP-based service server can maintain services with the terminal. In a case that the IP address changes, the IP-based service server may maintain the services with the terminal based on a technology such as multi-TCP and Quic.

In an embodiment of the present invention, an NG interface is an interface (e.g. a control plane interface) between a RAN and a CN, alternatively known as S 1 interface or N2 interface. No restrictions will be imposed on naming.

In an optional embodiment of the present invention, N3 is an interface between the RAN element and a user plane network element. N9 is an interface between user plane network elements. The RAN element is directly connected to the anchor gateway (which is a user plane network element) through N3 or through another user plane network element.

In an optional embodiment of the present invention, the importance level of a data packet is located in description information of a data set.

In an optional embodiment of the present invention, the user plane network element includes: a user plane network element (e.g. UPF and the anchor gateways) of the core network.

In an optional embodiment of the present invention, monitoring, measurement, and monitoring of network resource loads are all measures for obtaining the network resource loads.

In an optional embodiment of the present invention, monitoring, measurement, and monitoring may represent the same meaning.

In an optional embodiment of the present invention, the concepts of a resource load and a network resource load is one meaning and can be mixed. The network resource load includes at least one of the following: a resource load of a first terminal (e.g. a first communication device), a resource load of a second terminal (e.g. a second communication device), a resource load of a transport layer, a resource load of a RAN element, and a resource load of a user plane network element.

In an optional embodiment of the present invention, the network resource load includes a network resource usage state, which can be reflected by a network resource usage level. The network resource load level includes a network congestion level, which can be reflected by the network congestion level.

In an optional embodiment of the present invention, the resource load includes a resource usage state, which can be reflected by a resource usage level. The network load level includes a congestion level.

In an optional embodiment of the present invention, an actual resource load or actual network resource load is a measured resource load.

In an optional embodiment of the present invention, the network resource load includes a network resource usage state, which can be reflected by a network resource usage level. The network resource load level includes a network congestion level, which can be reflected by the network congestion level.

In an optional embodiment of the present invention, an importance level includes indication information used for indicating an importance value, or indication information used for indicating the importance level. The importance level can be expressed as an importance parameter.

In an implementation, an importance level range can be reflected through an importance level. For example, importance level X is used for indicating that the importance level range is all importance levels of importances less than or equal to the Xth importance. For example, importance level Y is used for indicating that the importance level range is all importance levels of importances greater than or equal to the Yth importance.

In an optional embodiment of the present invention, the importance level includes a priority (e.g. priority, ARP (Allocate/Reserve Priority, Allocation/Retention Priority)).

In an optional embodiment of the present invention, a service application layer packet header is for example n L4S protocol packet header.

In an optional embodiment of the present invention, information of a terminal is used for identifying the terminal. The information of the terminal includes at least one: an identifier of the terminal, an IP address of the terminal, and an MAC address of the terminal.

In an optional embodiment of the present invention, description information of a data flow is used for identifying that the data flow belongs to at least one of the following: service, application, task, and the data flow.

In an embodiment of the present application, the data flow includes service data flow (e.g. service data flow). The data flow can be referred to as flow or data flow.

In an optional embodiment of the present invention, the description information of the data flow includes at least one of the following: description information of one or more pieces of data, description information of one or more data sets, service type information, a fully qualified domain name (Fully Qualified Domain Name, FQDN), a source IP address, a destination IP address, a source port, a destination terminal, a protocol number, a source media access control (Media Access Control, MAC) address, a target MAC address, an application (Application) identifier of a service, an operating system (OS) identifier, a packet detection rule (packet detection rule, PDR), and a data network name (Data Network Name, DNN).

In an optional embodiment of the present invention, a data set is a meaning. The data set can be a data set composed of some data from either a first object or a second object. A data set includes one or more pieces of data. Generally, the importances of the data in a data set can be the same. The importances of the data in different data sets can be different.

In an optional embodiment of the present invention, the description information of the data or the description information of the data set includes at least one of the following: an importance level, description information of a group of pictures (Group of Pictures, GoP), description information of a frame, description information of a slice, description information of a tile, description information of FOV, and description information of DoF.

In an implementation, the description information of the frame includes at least one of the following: a frame type of the frame (for example, but not limited to, I-frame, P-frame, and B-frame), and the number of data packets contained in the frame.

In an implementation, the description information of the slice includes at least one of the following: a slice type of the slice (for example, but not limited to, I slice, P slice, and B slice), and the number of data packets contained in the slice.

In an implementation, the description of the tile includes at least one of the following: a tile type of the tile (for example, but not limited to, I tile, P tile, and B tile), and the number of data packets contained in the tile.

In an implementation, the description information of the GOP includes at least one of the following: a frame type contained in the GOP, a frame appearing order, and the number of contained data packets.

In an optional embodiment of the present invention, the description information of the data flow and/or the description information of the data set may be reflected as packet filter information or data packet detection information.

In an optional embodiment of the present invention, information of a channel or channel information is used for identifying the channel, and the information of the channel or the channel information includes at least one of: an identifier of the channel (e.g. an identifier of a PDU session, an identifier of a QoS flow, an identifier of a radio bearer).

In an optional embodiment of the present application, the channel may include at least one of the following: a PDU session, a quality of service (Quality of Service, QoS) flow, an evolved packet system (Evolved Packet System, EPS) bearer, a PDP context, a DRB, an SRB, and an Internet protocol security (Internet Protocol Security, IPsec) association.

In an embodiment of the present application, the IPsec channel may be an IPsec security association (Security Association, SA). A first IPsec channel can be referred to as one of the following: signaling IPsec SA, a primary IPsec SA, and an IPsec SA for transmitting control signaling. Or, other names may be used. The present application does not specifically limit this. The data IPsec channel can be referred to as one of the following: data IPsec SA, IPsec sub SA, IPsec SA for transmitting user plane data, and IPsec SA for transmitting QoS stream data. Or, other names may be used. The present application does not specifically limit this. In an embodiment of the present invention, a wireless communication network may be at least one of the following: a public network and a non-public network; or, a first network can be a non-public network.

In an embodiment of the present invention, the non-public network is the abbreviation of non-public network. The non-public network can be referred to as one of the following: non-public communication network. The non-public network can include at least one of the following deployment modes: a physical non-public network, a virtual non-public network, and a non-public network implemented on the public network. In an implementation, the non-public network is a closed access group (Closed Access Group, CAG). A CAG can be composed of a group of terminals.

In an embodiment of the present invention, the non-public network may include or be referred to as a private network. The private network can be referred to as one of the following: a private communication network, a private network, a local area network (Local Area Network, LAN), a private virtual network (Private Virtual Network, PVN), an isolated communication network, a dedicated communication network, or other names. It should be noted, the embodiments of the present invention do not impose any restrictions on the naming mode.

In an embodiment of the present invention, the public network is the abbreviation of public network. The public network can be referred to as one of the following: a public communication network or other names. It should be noted, the embodiments of the present invention do not impose any restrictions on the naming mode.

In an embodiment of the present invention, a data packet size may be referred to as a data packet length.

In an embodiment of the present invention, a data packet may be referred to as a data frame.

The following describes an information control method of the embodiments of the present invention.

FIG. 2 is a flowchart I of an information control method according to an embodiment of the present invention. Referring to FIG. 2, the embodiments of the present invention provide an information control method, applied to a first communication device. The first communication device includes, but is not limited to, at least one of the following: a RAN element (including a RAN of a service terminal or a source RAN in a mobile scenario, or a target RAN), a CN element (e.g. an AMF, and an SMF (including an SMF of a service terminal, or a source SMF in a redirection scenario, or a target SMF), a PCF, an NEF, and an anchor gateway (e.g. UPF)). The method includes:

Step 200. The first communication device executes a first operation. The first operation includes at least one of the following operations:
measuring a data transmission rate; and
sending first information.

The first information includes at least one of the following:
information used for indicating a data transmission rate;
a first event, including at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
first indication information, wherein the first indication information is used for indicating beginning or occurrence of the first event;
second indication information, wherein the second indication information is used for indicating completion of the first event;
third indication information, wherein the third indication information is used for indicating a failure of the first event;
a first event duration; and
a second event, including at least one of the following: a data transmission recovery event, an event in which the data transmission rate is no longer zero, and an event in which connection between a terminal and a network is recovered.

In an implementation, the first communication device can send first information to a first target device, and the first target device includes but is not limited to at least one of the following: a second communication device (e.g. a UPF), a CN element (e.g. a UPF, an AMF, an SMF, a PCF, an NEF, and an AF), and the like.

For example, in a case that the first communication device is the RAN element, the first communication device can send the first information to the UPF or the AMF, or to the SMF through the AMF.

For example, in a case that the first communication device is the AMF, the first communication device can send the first information to an SMF.

For example, in a case that the first communication device is the SMF, the first communication device can send the first information to a PCF.

For example, in a case that the first communication device is the PCF, the first communication device can send the first information to an AF or an NEF, or to the AF through the NEF.

For example, in a case that the first communication device is the NEF, the first communication device can send the first information to the AF.

In an implementation, the data transmission rate in the first information is a data transmission rate measured by a first communication device.

In an implementation, the information used for indicating a data transmission rate includes at least one of the following: the data transmission rate, and a transmission rate value index corresponding to the data transmission rate.

In an implementation, the transmission rate value index can be used for indicating or mapping a transmission rate value or a value range of the transmission rate.

In an implementation, the first event duration is a time length from the beginning of the first event to the completion of the first event. The first event duration reported along with the first indication can be a first event duration determined by the first communication device based on an empirical value, which is an expected first event duration.

In a handover process, the IP address of a terminal remains unchanged or can be changed.

In a scenario where the IP changes, an application or a service may or may not be interrupted. In this case, the change of the IP can be reported. An application server can determine whether the application or service may or may not be interrupted and then determine the next step.

In an implementation, handover and redirection in a RAN generally do not cause a gateway to change. If the gateway remains unchanged, the IP address of the terminal remains unchanged. Handover between RANs may cause a gateway to change. After the gateway changes, the IP continuity may not be maintained. An anchor gateway (e.g. a UPF) or an SMF can determine whether the IP of a terminal changes.

Handover may cause data transmission interruption, or may not cause data transmission interruption (e.g. supporting the DAPS). In this case, a terminal transfer event that does not cause data transmission interruption will not be reported. It is easy to understand that since handover has no impact on a service link, the application server may not do anything at this time.

The data transmission during the handover is not interrupted (e.g. supporting DAPS), but the rate may decrease. At this point, a terminal transfer event that causes data transmission rate decrease can be reported. Since this is a short-term process, the application server may not reduce the transmission throughput rate or change the encoding efficiency at this time.

In an implementation, the first communication device can determine the first event duration according to an empirical value.

Optionally, the terminal transfer includes at least one of the following: terminal handover, terminal redirection, session recreation, and terminal re-registration;
and/or
the terminal transfer event includes at least one of the following: a terminal transfer event in which IP continuity is maintained, and a terminal transfer event in which IP continuity is not maintained;
   and/or
the event in which connection between a terminal and a network is cut off includes at least one of the following events: the terminal actively asking to release the connection with the network, and a radio link failure between the terminal and the network.

Optionally, the terminal transfer event in which IP continuity is maintained includes at least one of the following events: the terminal transfer event in which IP continuity is maintained includes at least one of the following events: terminal handover in which the IP continuity of a terminal is maintained, terminal redirection in which the IP continuity of a terminal is maintained, session recreation in which the IP continuity of a terminal is maintained, and terminal re-registration in which the IP continuity of a terminal is maintained;
and/or
the terminal transfer event in which IP continuity is not maintained includes at least one of the following: terminal handover in which the IP continuity of a terminal is not maintained, terminal redirection in which the IP continuity of a terminal is not maintained, session recreation in which the IP continuity of a terminal is not maintained, and terminal re-registration in which the IP continuity of a terminal is not maintained.

In an implementation, the handover includes at least one of the following: handover in RANs, handover between the RANs based on interfaces between the RANs, and handover between RANs based on N2 interfaces.

In an implementation, the SMF can report the handover based on the N2 interfaces or the data transmission interruption or rate decrease event caused by the handover based on the N2 interfaces.

In an implementation, the AMF can report at least one of the following: terminal re-registration, terminal and network disconnection, data transmission interruption caused by terminal re-registration handover, and data transmission interruption caused by terminal and network disconnection handover.

In an implementation, the RAN reports data transmission interruption or rate decrease events caused by other handover except the handover based on the N2 interfaces (e.g. handover in the RANs and handover based on the interfaces between the RANs) or data transmission interruption or rate decrease events caused by other handover except the handover based on the N2 interfaces.

In an implementation, the redirection includes any one of the following: a redirection scenario in the RAN; and a redirection scenario between the RANs (including redirection between systems).

In an implementation, the RAN reports redirection or a data transmission interruption or rate decrease event caused by redirection.

In an implementation, in a scenario where a terminal is handed over or redirected in the RANs, the first communication device can be the RAN element corresponding to the terminal.

In an implementation, in a scenario where a terminal is handed over based on Xn, the first communication device can be the source RAN element or the target RAN element corresponding to the terminal.

In an implementation, in a scenario where a terminal is redirected between the RANs, the first communication device can be the source RAN element corresponding to the terminal.

In an implementation, in a scenario where a terminal is handed over based on N2, the first communication device can be the source RAN element, the source SMF, the target SMF, or the target RAN element corresponding to the terminal.

Optionally, the data transmission interruption or rate decrease event includes at least one of the following: a first transmission interruption or rate decrease event and a second transmission interruption or rate decrease event;
wherein
the first transmission interruption or rate decrease event includes at least one of the following: data transmission interruption caused by a third event, temporary data transmission interruption, or a data transmission interruption or rate decrease event expected to be recovered;
the third event includes at least one of the following: a terminal transfer event in which IP continuity is maintained, and a terminal transfer event;
the second transmission interruption or rate decrease event includes at least one of the following: data transmission interruption or rate decrease caused by a fourth event, a data transmission interruption or rate decrease event with an unknown recovery possibility, a data transmission interruption or rate decrease event in which IP continuity is not maintained, and an abnormal data transmission interruption or rate decrease event; and
the fourth event includes at least one of the following: an event in which an IP address of a terminal changes, a terminal transfer event in which an IP address of a terminal changes, an event in which connection between a terminal and a network is cut off, and an event of a radio link failure between a terminal and a network.

In an implementation, the first data transmission interruption or rate decrease event may alternatively be understood as a normal data transmission interruption or rate decrease event), for example, a data transmission interruption or rate decrease event caused by UE movement (handover and redirection).

In an implementation, the second data transmission interruption or rate decrease event may alternatively be understood as an abnormal data transmission interruption or rate decrease event), for example, a data transmission interruption or rate decrease event caused by a ratio link failure.

Optionally, for an IP-based terminal service, the third event includes at least one of the following: a terminal transfer event, and a terminal transfer event in which IP continuity is maintained;
and/or
for an ethernet-based terminal service, the third event includes at least one of the following: a terminal transfer event.

Optionally, the session recreation includes at least one of the following: ethernet-type session recreation and IP-type session recreation.

Optionally, the IP-type session recreation includes at least one of the following: IP-type session recreation in which an IP address is maintained unchanged, and IP-type session recreation in which an IP address changes.

In an implementation, if the session is ethernet type, the session recreation may cause temporary data interruption, but the server can maintain the transmission rate of the link.

In an implementation, if the session is IP type, the session recreation may cause temporary data interruption. However, if the IP address of the terminal can remain unchanged, or if the IP address changes but service connection between the terminal and the server can still be maintained through upper layer connection (for example, the upper layer connection is a multi-TCP or QUIC (Quick UDP Internet Connection) mode), the server can maintain the transmission rate of the service.

In an implementation, if the session recreation is the session recreation in which the IP address changes, but the connection is single-TCP or UDP, the terminal needs to be reconnected to the service server, and the server can abandon downlink data and a service link between terminals.

It is easy to understand that for an IP-based service that is sensitive to an IP change, during subscription of the first transmission interruption or rate decrease event, more attention is paid to the third event, which is a first transmission interruption or rate decrease event caused by the terminal transfer event in which IP continuity is maintained.

For an IP-based service that is not affected by the change in the IP of the terminal, during subscription of the first transmission interruption or rate decrease event, attention is only paid to the third event, which is a first transmission interruption or rate decrease event caused by the terminal transfer event, instead of caring about whether the IP continuity in the terminal transfer event is maintained.

Optionally, the first communication device executes a first operation, which includes:
The first communication device obtains first monitoring requirement information; and
the first communication device executes the first operation according to the first monitoring requirement information.

The first monitoring requirement information includes at least one of the following:
fourth indication information, used for indicating at least one of the following: in a case that the first event occurs, reporting the first event, the first indication information, and/or the first event duration; in a case that the first event ends, reporting the second indication information and/or the first event duration; in a case that the first event fails, reporting the third indication information; and in a case that the second event occurs, reporting the second event;
fifth indication information, used for indicating at least one of the following: reporting the first information through a control plane (for example, through a control plane message), or reporting the first information through a user plane (for example, through an uplink data packet);
sixth indication information, used for indicating: asking to measure a data transmission rate;
one or more rate value ranges;
one or more reporting conditions for triggering reporting of a data transmission rate;
a reporting event of a data transmission rate, wherein the reporting event includes at least one of the following: the occurrence of the first event, the completion of the first event, the failure of the first event, and the occurrence of the second event; and
a reporting cycle of a data transmission rate.

In an implementation, the first communication device can obtain the first monitoring requirement information from a first source device. The first source device includes but is not limited to at least one of the following: a sixth communication device (e.g. an SMF), a CN element (e.g. an AMF, an SMF and a PCF), and the like.

For example, in a case that the first communication device is the RAN element, the first communication device can obtain the first monitoring requirement information from the AMF or the SMF.

For example, in a case that the first communication device is the AMF, the first communication device can obtain the first monitoring requirement information from the SMF.

For example, in a case that the first communication device is the SMF, the first communication device can obtain the first monitoring requirement information from the PCF.

For example, in a case that the first communication device is the SMF, the first communication device can obtain the first monitoring requirement information from the SMF or the PCF.

In an implementation, the data transmission rate includes: a channel-granularity data transmission rate and a terminal-granularity data transmission rate.

In an implementation, the first monitoring requirement information is channel-granularity first monitoring requirement information.

Optionally, the reporting condition includes at least one of the following: the rate is zero, the rate reaches any value range among N rate value ranges, and the rate is greater than or equal to M;
wherein
N is a natural number greater than or equal to 1; and
M is a value of the rate.

In an implementation, the N value ranges are one or more rate value ranges in the first monitoring requirement information, or one or more rate value ranges locally configured by the first communication device.

One of the value ranges may be, for example, [A, B], where A is a rate value greater than or equal to zero, and B is a rate value greater than B.

A reported value range is for example: 0, 0-A, A-B, and B or more. For example, when the rate is zero, greater than zero and less than A, between A and B, or greater than or equal to B, the data transmission rate information will be reported.

Optionally, the first communication device sends the first transmission interruption or rate decrease event, a first indication corresponding to the first transmission interruption event, and/or, a duration corresponding to the first transmission interruption event, which includes: In a case that a first condition is satisfied, the first communication device sends the first indication information corresponding to the first transmission interruption event, and/or, the duration corresponding to the first transmission interruption event.

The first condition includes at least one of the following: the third event occurs, and the data transmission interruption or rate decrease caused by the third event occurs.

For an IP-based terminal service, the third event includes at least one of the following: a terminal transfer event, and a terminal transfer event in which IP continuity is maintained;
and/or
for an ethernet-based terminal service, the third event includes at least one of the following: a terminal transfer event.

It is easy to understand for the IP-based terminal service, if the terminal transfer event in which IP remains unchanged occurs, causing the transmission rate of link to decrease or be interrupted, the server can maintain the throughput rate and/or not adjust the encoding efficiency. Since the IP address remains unchanged, the link is maintained. After the terminal transfer event ends, the transmission rate of the link will increase or be recovered. If the terminal transfer event in which the IP changes, it depends on whether an upper layer between the server and the terminal can maintain the service link. For an upper layer that can maintain the service link, whether the IP address changes is not important, as long as the current transmission rate decrease or transmission interruption of the link is caused by the terminal transfer event. The server can maintain the throughput rate and/or not adjust the encoding efficiency because the transmission rate of the link will increase or be recovered after the terminal transfer event ends.

Similarly, the ethernet-based terminal service does not have an IP address, so attention is paid to the terminal transfer event only.

Optionally, the first communication device sends the second transmission interruption or rate decrease event, a first indication corresponding to the second transmission interruption event, and/or, a duration corresponding to the second transmission interruption event, which includes In a case that a second condition is satisfied, the first communication device sends the second transmission interruption event, the first indication corresponding to the second transmission interruption event, and/or, the duration corresponding to the second transmission interruption event.

The second condition includes at least one of the following: the fourth event occurs, and the data transmission interruption or rate decrease caused by the fourth event occurs.

In an implementation, in case of the data transmission interruption or rate decrease caused by the change in the IP address of the terminal, the terminal transfer caused by the change in the IP address of the terminal, the terminal and network disconnection, the radio link failure between the terminal and the network, and the like, the second transmission interruption or rate decrease event can be sent.

Optionally, the information used for indicating a data transmission rate includes at least one of the following:
in a case that a third condition is satisfied, the first communication device sends the information used for indicating a data transmission rate;
the third condition includes at least one of the following:
   the measured data transmission rate is determined to satisfy the reporting condition;
   the first event occurs;
   the first event is completed;
   the first event fails; and
   the second event occurs.

In an implementation, in case of the data transmission interruption caused by terminal transfer, such as the data transmission interruption caused by terminal handover or redirection, the first transmission interruption or rate decrease event can be sent.

In an implementation, in case of the data transmission interruption caused by the radio link failure of the terminal, the second transmission interruption or rate decrease event can be sent.

In case of data transmission recovery (for example, in a case that the wireless connection is recovered after the handover or redirection ends), the data transmission recovery event can be sent.

Optionally, the sending first information includes at least one of the following:
The first communication device sends an uplink data packet, wherein a packet header of the uplink data packet contains the first information; and
the first communication device sends a control plane message, wherein the control plane message contains the first information.

In an implementation, the uplink data packet may be an uplink data packet of the terminal.

In an implementation, the uplink data packet may be a data packet generated by the first communication device and used for data transmission monitoring, such as a data packet used for sending the first information and having no real data payload.

For example, in a case that the first communication device is the SMF or AMF, the control plane message can be used.

For example, in a case that the first communication device is the RAN, the control plane message or the uplink data packet can be used.

Optionally, the packet header of the uplink data packet includes at least one of the following: a GTP packet header and a service application layer packet header (e.g. an L4S packet header).

Through the embodiments of the present invention, an application server can determine whether to adjust the throughput rate and/or encoding efficiency of sent data and ensure the service experience of a user.

FIG. 3 is a flowchart II of an information control method according to an embodiment of the present invention. Referring to FIG. 3, the embodiments of the present invention provide an information control method, applied to a second communication device. The second communication device includes but is not limited to a CN element (e.g. a UPF (anchor gateway UPF)). The method includes:
Step 300. The second communication device executes a second operation. The second operation includes at least one of the following operations:
obtaining first information;
determining second information; and
sending the second information.

The first information includes at least one of the following:
information used for indicating a data transmission rate;
a first event, including at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
first indication information, wherein the first indication information is used for indicating beginning or occurrence of the first event;
second indication information, wherein the second indication information is used for indicating completion of the first event;
third indication information, wherein the third indication information is used for indicating a failure of the first event;
a first event duration; and
a second event, including at least one of the following: a data transmission recovery event, an event in which the data transmission rate is no longer zero, and an event in which connection between a terminal and a network is recovered;
wherein the data transmission rate in the first information is a data transmission rate measured by a first communication device.

The second information includes at least one of the following:
information used for indicating a data transmission rate;
a fifth event, including at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
seventh indication information, wherein the seventh indication information is used for indicating beginning or occurrence of the fifth event;
eighth indication information, wherein the eighth indication information is used for indicating completion of the fifth event;
ninth indication information, wherein the ninth indication information is used for indicating a failure of the fifth event; and
a fifth event duration; and
a sixth event, including at least one of the following: a data transmission recovery event, an event in which the data transmission rate is no longer zero, and an event in which connection between a terminal and a network is recovered.

In an implementation, the second communication device can obtain the first information from a second source device. The second source device includes but is not limited to a first communication device (e.g. a RAN element (including a RAN of a service terminal, a RAN in a moving scenario, or a target RAN), a CN element (e.g. an AMF, an SMF, and a UPF)), and the like.

In an implementation, the second communication device can send the second information to a second target device, and the second target device includes but is not limited to a third communication device (e.g. an AF), a CN element (e.g. a UPF, an SMF, a PCF, an NEF, and an AF), and the like.

The terminal transfer and the data transmission interruption or rate decrease event are as described in the embodiment of FIG. 2, and will not be elaborated here.

Optionally, content of the second information includes at least one of the following:
information self-determined by the second communication device;
information in the first information; and
information determined by the second communication device according to the first information.

The data transmission rate in the second information is a data transmission rate measured by the second communication device or the data transmission rate contained in the first information;
the events in the fifth event include at least one of the following: a first event, a fifth event determined according to the first event, and a self-determined fifth event;
the events in the sixth event include at least one of the following: a second event, a sixth event determined according to the second event, and a self-determined sixth event; and
the fifth event duration is a fifth event duration determined by the second communication device or the first event duration contained in the first information.

Optionally, the second information determined by the second communication device according to the first information includes at least one of the following: an operation for determining the fifth event according to the first event, including at least one of the following:
in a case that the first information includes the terminal transfer event, and the second communication device determines that the IP address is maintained unchanged, the fifth event determined by the second communication device includes: the terminal transfer event in which IP continuity is maintained;
in a case that the first information includes the terminal transfer event, and the second communication device determines that the IP address is maintained unchanged and the data transmission rate is zero or decreases, the fifth event determined by the second communication device includes: the data transmission interruption or rate decrease event in which IP continuity is maintained; and
in a case that the first information includes the data transmission interruption or rate decrease event, and the second communication device determines that the IP address is maintained unchanged, the fifth event determined by the second communication device includes: the data transmission interruption or rate decrease event in which IP continuity is maintained; and
in a case that the first information includes the data transmission interruption or rate decrease event caused by terminal transfer, and the second communication device determines that the IP address is maintained unchanged, the fifth event determined by the second communication device includes the data transmission interruption or rate decrease event, caused by terminal transfer, in which IP continuity is maintained.

Optionally, the second communication device executes a second operation, which includes:

The second communication device obtains second monitoring requirement information; and
the second communication device executes the second operation according to the second monitoring requirement information;
wherein
the second monitoring requirement information includes at least one of the following:
   tenth indication information, used for indicating: asking to measure a data transmission rate;
   one or more rate value ranges;
   one or more reporting conditions for triggering reporting of a data transmission rate;
   a reporting event of a data transmission rate, wherein the reporting event includes at least one of the following: the occurrence of the first event, the completion of the first event, the failure of the first event, and the occurrence of the second event;
   a reporting cycle of a data transmission rate;
   eleventh indication information, used for indicating: asking to execute at least one of the following third operations: obtaining the first information (e.g. obtaining the first information sent by a first target terminal by monitoring an uplink packet), and monitoring the first information sent by the first target terminal; and
   a time period of executing the third operation.

In an implementation, the second communication device can obtain the second monitoring requirement information from a third source device. The third source device includes but is not limited to at least one of the following: a sixth communication device (e.g. an SMF), a CN element (e.g. an SMF and a PCF), and the like.

In an implementation, the second monitoring requirement information is channel-granularity second monitoring requirement information.

In an implementation, the data transmission rate includes: a channel-granularity data transmission rate and a terminal-granularity data transmission rate.

The reporting condition of one or more data transmission rates is as described in the embodiment of FIG. 2, and will not be elaborated here.

Optionally, the reporting condition includes at least one of the following: the rate is zero, the rate reaches any value range among N rate value ranges, and the rate is greater than or equal to M;
wherein
N is a natural number greater than or equal to 1; and
M is a value of the rate.

In an implementation, the N value ranges are one or more rate value ranges in the second monitoring requirement information, or one or more rate value ranges locally configured by the second communication device.

Optionally, the second communication device obtains first information, which includes at least one of the following:
The second communication device receives an uplink data packet, wherein a packet header of the uplink data packet contains the first information; ands
the second communication device receives a control plane message, wherein the control plane message contains the first information.

In an implementation, the uplink data packet is sent by the first communication device. The second communication device receives the uplink data packet from the first communication device or through an intermediate device. Namely, the first communication device sends the uplink data packet to the intermediate device (e.g. an I-UPF), and the intermediate device sends the uplink data packet to the second communication device.

In an implementation, the control plane message is sent by the first communication device. The second communication device receives the uplink data packet from the first communication device or through an intermediate device. Namely, the first communication device sends the uplink data packet to the intermediate device (e.g. an AMF or an SMF), and the intermediate device sends the uplink data packet to the second communication device.

In an implementation, the uplink data packet includes a service data packet, or a data packet used for data transmission monitoring.

Optionally, the packet header of the uplink data packet includes at least one of the following: a GTP packet header and a service application layer packet header.

Through the embodiments of the present invention, an application server can determine whether to adjust the throughput rate and/or encoding efficiency of sent data and ensure the service experience of a user.

FIG. 4 is a flowchart III of an information control method according to an embodiment of the present invention. Referring to FIG. 4, the embodiments of the present invention provide an information control method, applied to a third communication device. The third communication device includes but is not limited to a CN element (e.g. an AF and an NEF). The method includes:
Step 400. The third communication device executes a fourth operation. The fourth operation includes at least one of the following operations:
sending a first subscription request; and
sending a second subscription request;
wherein the first subscription request includes at least one of the following:
   information of a terminal;
   a data transmission rate of a data flow;
   one or more rate value ranges;
   one or more reporting conditions for triggering reporting of a data transmission rate;
   a reporting event of a data transmission rate, wherein the reporting event includes at least one of the following: occurrence of a first subscription event, completion of the first subscription event, a failure of the first subscription event, and occurrence of a second subscription event;
   a reporting cycle of a data transmission rate;
   a first subscription event;
   a second subscription event; and
   twelfth indication information, used for indicating at least one of the following: in a case that a first event occurs, reporting the first event, the occurrence of the first event, and/or a first event duration; in a case that the first event ends, reporting the end of the first event and/or the first event duration; in a case that the first event fails, reporting a first event failure indication; and in a case that a second event occurs, reporting the second event;
   wherein the first subscription event includes at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
   the second subscription event includes at least one of the following: a data transmission recovery event, an event in which the data transmission rate is no longer zero, and an event in which connection between a terminal and a network is recovered;
   wherein the second subscription request includes at least one of the following: the information of the terminal, description information of the data flow, related subscription information of a predicted data transmission rate, and related subscription information of a predicted event;
   the related subscription information of the predicted data transmission rate includes at least one of the following: a first target time point, a first target time period, a first target region range, a first target location, and information used for indicating: asking to predict a data transmission rate;
   the related subscription information of the predicted event includes at least one of the following: a second target time period, a second target region range, and an event asked to be predicted; and
   the event asked to be predicted includes at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained.

In an implementation, the third communication device can send a first subscription request to a third target device, and the third target device includes but is not limited to at least one of the following: a fourth communication device (e.g. an NWDAF), a fifth communication device (e.g. a PCF), and the like.

The terminal transfer, the data transmission interruption or rate decrease event, the first event, and the second event are as described in the embodiment of FIG. 2, and will not be elaborated here.

In an implementation, the first target time period is used for indicating: asking to predict a data transmission rate within the first target time period.

In an implementation, the first target time point is used for indicating: asking to predict a data transmission rate at the first target time point.

In an implementation, the first target region range is used for indicating: asking to predict a data transmission rate within the first target region range.

In an implementation, the first target location is used for indicating: asking to predict a data transmission rate at the first target location.

In an implementation, the second target time period is used for indicating: asking to predict whether the event asked to be predicted occurs within the second target time period.

In an implementation, the second target time point is used for indicating: asking to predict whether the event asked to be predicted occurs at the second target time point.

In an implementation, the second target region range is used for indicating: asking to predict whether the event asked to be predicted occurs within the second target region range.

In an implementation, the second target location is used for indicating: asking to predict whether the event asked to be predicted occurs at the second target location.

In an implementation, the first target time period and the second target time period are the same (they are different by default).

In an implementation, the first target time point and the second target time point are the same (they are different by default).

In an implementation, the first target region range and the second target region range are the same (they are different by default).

In an implementation, the first target location and the second target location are the same (they are different by default).

Optionally, the reporting condition includes at least one of the following: the rate is zero, the rate reaches any value range among N rate value ranges, and the rate is greater than or equal to M;
wherein
N is a natural number greater than or equal to 1; and
M is a value of the rate.

In an implementation, the N value ranges are one or more rate value ranges in the first subscription request.

Optionally, the data transmission rate of the data flow is one of the following: a measured data transmission rate, related information of a predicted data transmission rate, and related information of an event predicted to occur.

Optionally, the data transmission interruption or rate decrease event includes at least one of the following: a first transmission interruption or rate decrease event and a second transmission interruption or rate decrease event;
wherein
the first transmission interruption or rate decrease event includes at least one of the following: data transmission interruption caused by a third event, temporary data transmission interruption, or a data transmission interruption or rate decrease event expected to be recovered;
the third event includes at least one of the following: a terminal transfer event in which IP continuity is maintained, and a terminal transfer event;
the second transmission interruption or rate decrease event includes at least one of the following: data transmission interruption or rate decrease caused by a fourth event, a data transmission interruption or rate decrease event with an unknown recovery possibility, a data transmission interruption or rate decrease event in which IP continuity is not maintained, and an abnormal data transmission interruption or rate decrease event; and
the fourth event includes at least one of the following: an event in which an IP address of a terminal changes, a terminal transfer event in which an IP address of a terminal changes, an event in which connection between a terminal and a network is cut off, and an event of a radio link failure between a terminal and a network.

Optionally, for an IP-based terminal service, the third event includes at least one of the following: a terminal transfer event, and a terminal transfer event in which IP continuity is maintained;
and/or
for an ethernet-based terminal service, the third event includes at least one of the following: a terminal transfer event.

Optionally, After the third communication device sends a first subscription request, the fourth operation further includes at least one of the following: obtaining first information and/or second information, and obtaining the related information of the event predicted to occur.

In an implementation, the third communication device can obtain the first information and/or the second information from a fourth source device. The fourth source device includes but is not limited to at least one of the following: a first communication device (e.g. a RAN element and a CN element (e.g. an AMF, an SMF, and a UPF)), a second communication device (e.g. a UPF), a CN element (e.g. a PCF and an NEF), and the like.

In an implementation, the third communication device can obtain the related information of the event predicted to occur from a fifth source device, and the fifth source device includes but is not limited to the fourth communication device (e.g. an NWDAF), and the like.

The first information is as described in the embodiment of FIG. 2, and will not be elaborated here.

The second information is as described in the embodiment of FIG. 3, and will not be elaborated here.

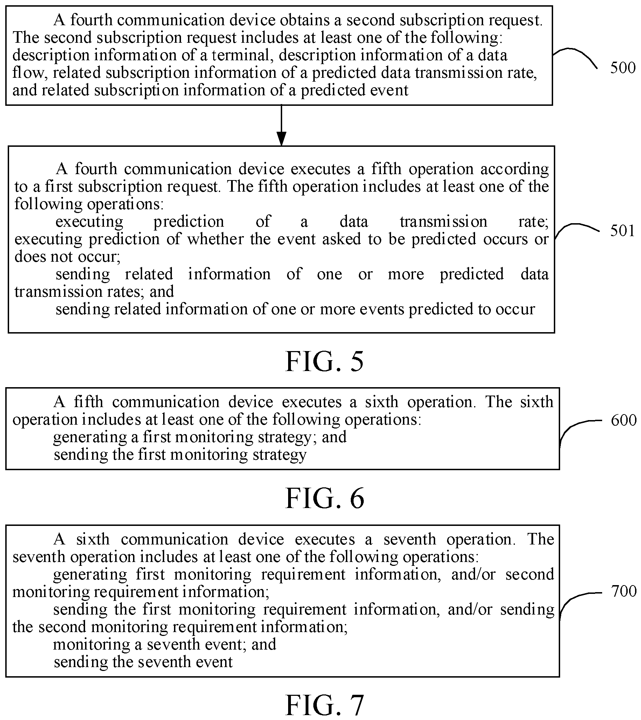

The related information of the event predicted to occur is as described in the embodiment of FIG. 5, and will not be elaborated here.

In an implementation, the third communication device or a device (e.g. an application server) connected to the third communication device executes at least one of the following based on the first information: controlling the throughput rate of sent data and controlling the encoding compression ratio.

Optionally, the third communication device obtains first information and/or second information, which includes:
The third communication device receives an uplink data packet, wherein a packet header of the uplink data packet contains the first information and/or the second information; and
the third communication device receives a control plane message, wherein the control plane message contains the first information and/or the second information.

In an implementation, the packet header is a packet header of an application layer, such as L4S.

In an implementation, the uplink data packet includes a service data packet, or a data packet used for data transmission monitoring.

In an implementation, the third communication device can receive the uplink data packet from the second communication device (e.g. a UPF), and the like.

In an implementation, the third communication device can receive the control plane message from the first communication device (e.g. a RAN element and a CN element (e.g. an AMF, an SMF, and a UPF)), the fourth communication device (e.g. an NWDAF), a CN element (e.g. an NEF and a PCF), and the like.

Through the embodiments of the present invention, an application server can determine whether to adjust the throughput rate and/or encoding efficiency of sent data and ensure the service experience of a user.

FIG. 5 is a flowchart IV of an information control method according to an embodiment of the present invention. Referring to FIG. 5, the embodiments of the present invention provide an information control method, applied to a fourth communication device. The fourth communication device includes but is not limited to a CN element (e.g. an NWDAF). The method includes:

Step 500. The fourth communication device obtains a second subscription request. The second subscription request includes at least one of the following: information of a terminal, description information of a data flow, related subscription information of a predicted data transmission rate, and related subscription information of a predicted event;
the related subscription information of the predicted data transmission rate includes at least one of the following: a first target time point, a first target time period, a first target region range, a first target location, and information used for indicating: asking to predict a data transmission rate; and
the related subscription information of the predicted event includes at least one of the following: a second target time period, a second target region range, and an event asked to be predicted.

Step 501. The fourth communication device executes a fifth operation according to a first subscription request. The fifth operation includes at least one of the following operations:
executing prediction of a data transmission rate;
executing prediction of whether the event asked to be predicted occurs or does not occur;
sending related information of one or more predicted data transmission rates; and
sending related information of one or more events predicted to occur.

The related information of the predicted data transmission rate includes at least one of the following:
first time;
a first territory; and
information used for indicating the predicted data transmission rate.

The related information of the event predicted to occur includes at least one of the following:
second time;
a second address; and
the event predicted to occur.

In an implementation, the fourth communication device can obtain the first subscription request from a sixth source device, and the sixth source device includes but is not limited to a third communication device (e.g. an AF), and the like.

In an implementation, the fourth communication device can send the related information of the predicted data transmission rate and/or the related information of the event predicted to occur to a fourth target device, and the fourth target device includes but is not limited to a third communication device (e.g. an AF) and the like.

The second subscription request is as described in the embodiment of FIG. 4, and will not be elaborated here.

In an implementation, the first target time period is used for indicating: asking to predict a data transmission rate within the first target time period.

In an implementation, the first target time point is used for indicating: asking to predict a data transmission rate at the first target time point.

In an implementation, the first target region range is used for indicating: asking to predict a data transmission rate within the first target region range.

In an implementation, the first target location is used for indicating: asking to predict a data transmission rate at the first target location.

In an implementation, the second target time period is used for indicating: asking to predict whether the event asked to be predicted occurs within the second target time period.

In an implementation, the second target time point is used for indicating: asking to predict whether the event asked to be predicted occurs at the second target time point.

In an implementation, the second target region range is used for indicating: asking to predict whether the event asked to be predicted occurs within the second target region range.

In an implementation, the second target location is used for indicating: asking to predict whether the event asked to be predicted occurs at the second target location.

In an implementation, the information used for indicating a predicted data transmission rate includes at least one of the following: the predicted data transmission rate, and a transmission rate value index corresponding to the predicted data transmission rate.

In an implementation, the nth time includes at least one of the following: an nth time point and an nth time segment.

In an implementation, the nth territory includes at least one of the following: an nth region and an nth location.

In an implementation, the nth time segment means a partial or complete time segment in the nth target time period. The nth target time period may include one or more time segments. Each time segment can correspond to a single predicted data transmission rate.

Thus, it is easy to understand that the relevant information of the predicted data transmission rates corresponding to different time segments can be different. A plurality of time segments can correspond to the relevant information of a plurality of predicted data transmission rates.

In an implementation, the relevant information of each predicted data transmission rate can correspond to the predicted data transmission rate at a specific time segment or time point. The predicted data transmission rate corresponding to the time segment can be one of the following: a predicted average data transmission rate at the time segment, a predicted minimum data transmission rate at the time segment, and a predicted maximum data transmission rate at the time segment.

In an implementation, the nth time point is a time point in the nth target time period. The nth target time period can include one or more time points. Each time point can correspond to a single predicted data transmission rate.

Thus, it is easy to understand that the relevant information of the predicted data transmission rates corresponding to different time points can be different. A plurality of time points can correspond to the relevant information of a plurality of predicted data transmission rates.

In an implementation, the predicted data transmission rate corresponding to the time point can be one of the following: a predicted average data transmission rate at the time point, a predicted minimum data transmission rate at the time point, and a predicted maximum data transmission rate at the time point.

The value of the n is one of the following: one and two.

In an implementation, the nth region means a partial or complete region within the nth target region range. The nth target region range may include one or more regions. Each region can correspond to a single predicted data transmission rate.

Thus, it is easy to understand that the relevant information of the predicted data transmission rates corresponding to different regions can be different. A plurality of regions can correspond to the relevant information of a plurality of predicted data transmission rates.

In an implementation, the relevant information of each predicted data transmission rate can correspond to the predicted data transmission rate at a specific region or location. The predicted data transmission rate corresponding to the region can be one of the following: a predicted average data transmission rate at the region, a predicted minimum data transmission rate at the region, and a predicted maximum data transmission rate at the region.

In an implementation, the nth location is a location in the nth target region range. The nth target region range can include one or more locations. Each location can correspond to a single predicted data transmission rate.

Thus, it is easy to understand that the relevant information of the predicted data transmission rates corresponding to different locations can be different. A plurality of locations can correspond to the relevant information of a plurality of predicted data transmission rates.

In an implementation, the predicted data transmission rate corresponding to the location can be one of the following: a predicted average data transmission rate at the location, a predicted minimum data transmission rate at the location, and a predicted maximum data transmission rate at the location.

The value of the n is one of the following: one and two.

Optionally, the predicted data transmission rate includes at least one of the following:
a predicted data transmission rate at the first time and/or the first territory;
a predicted data transmission rate of the data flow; and
a predicted data transmission rate of the terminal.

Optionally, the predicted data transmission rate at the first time and/or the first territory includes:
a predicted data transmission rate of the data flow of the terminal at the first time and/or the first territory.

Optionally, the event predicted to occur includes at least one of the following:
a predicted event occurring at first time and/or the first territory;
a predicted event occurring at the data flow; and
a predicted event occurring at the terminal.

Optionally, the predicted event occurring at first time and/or the first territory includes:
a predicted event occurring at the data flow of the terminal at the first time and/or the first territory.

Through the embodiments of the present invention, an application server can determine whether to adjust the throughput rate and/or encoding efficiency of sent data and ensure the service experience of a user.

FIG. 6 is a flowchart V of an information control method according to an embodiment of the present invention. Referring to FIG. 6, the embodiments of the present invention provide an information control method, applied to a fifth communication device. The fifth communication device includes but is not limited to a CN element (e.g. a PCF). The method includes:
Step 600. The fifth communication device executes a sixth operation. The sixth operation includes at least one of the following operations:
generating a first monitoring policy; and
sending the first monitoring policy;
wherein
the first monitoring policy includes at least one of the following:
   thirteenth indication information, used for indicating at least one of the following: in a case that a first event occurs, reporting the first event, first indication information, and/or a first event duration; in a case that the first event ends, reporting second indication information and/or the first event duration; in a case that the first event fails, reporting third indication information; and in a case that a second event occurs, reporting the second event;
   fourteenth indication information, used for indicating at least one of the following: reporting first information through a control plane, or reporting the first information through a user plane;
   fifteenth indication information, used for indicating: asking to measure a data transmission rate;
   one or more rate value ranges;
   one or more reporting conditions for triggering reporting of a data transmission rate;
   a reporting event of a data transmission rate, wherein the reporting event includes at least one of the following: the occurrence of the first event, the completion of the first event, the failure of the first event, and the occurrence of the second event; and
   a reporting cycle of a data transmission rate.

In an implementation, the fifth communication device can send the first monitoring policy to a fifth target device, and the fifth target device includes but is not limited to a sixth communication device (e.g. an SMF).

Optionally, the reporting condition includes at least one of the following: the rate is zero, the rate reaches any value range among N rate value ranges, and the rate is greater than or equal to M;
wherein
N is a natural number greater than or equal to 1; and
M is a value of the rate.

In an implementation, the N value ranges are one or more rate value ranges of the first monitoring policy.

Optionally, the fifth communication device executes a sixth operation, which includes:
A first subscription request is obtained; and
the fifth communication device executes the sixth operation according to the first subscription request.

The first subscription request is as described in the embodiment of FIG. 4, and will not be elaborated here.

Optionally, after the step of sending the first monitoring policy, the sixth operation further includes at least one of the following:
obtaining the first information, second information, and related information of an event predicted to occur; and
sending the first information, the second information, and the related information of the event predicted to occur.

In an implementation, the fifth communication device can obtain the first information, the second information, and/or the related information of the event predicted to occur from a seventh source device, and the seventh source device includes but is not limited to a first communication device (e.g. a RAN element, a CN element (e.g. an AMF, an SMF, and a UPF)), a second communication device (e.g. a UPF), a fourth communication device (e.g. an NWDAF), and the like.

In an implementation, the fifth communication device can send the first information, the second information, and/or the related information of the event predicted to occur to a sixth target device, and the sixth target device includes but is not limited to a third communication device (e.g. an AM), a CN element (e.g. an NEF and an AF), and the like.

The first information is as described in the embodiment of FIG. 2, and will not be elaborated here.

The second information is as described in the embodiment of FIG. 3, and will not be elaborated here.

The related information of the event predicted to occur is as described in the embodiment of FIG. 5, and will not be elaborated here.

Through the embodiments of the present invention, an application server can determine whether to adjust the throughput rate and/or encoding efficiency of sent data and ensure the service experience of a user.

FIG. 7 is a flowchart VI of an information control method according to an embodiment of the present invention. Referring to FIG. 7, the embodiments of the present invention provide an information control method, applied to a sixth communication device. The sixth communication device includes but is not limited to a CN element (e.g. an SMF). The method includes:

Step 700. The sixth communication device executes a seventh operation. The seventh operation includes at least one of the following operations:
generating first monitoring requirement information, and/or second monitoring requirement information;
sending the first monitoring requirement information, and/or sending the second monitoring requirement information;
monitoring a seventh event; and
sending the seventh event;
wherein
the seventh event includes at least one of the following: a terminal handover event, a data transmission interruption or rate decrease event, an event in which an IP address of a terminal changes, a terminal handover event in which IP continuity is maintained, a data transmission interruption or rate decrease event in which IP continuity is maintained, a data transmission interruption or rate decrease event caused by terminal handover, and a data transmission interruption or rate decrease event, caused by terminal handover, in which IP continuity is maintained;
wherein
the first monitoring requirement information includes at least one of the following:
   fourth indication information, used for indicating at least one of the following: in a case that a first event occurs, reporting the first event, first indication information, and/or a first event duration; in a case that the first event ends, reporting second indication information and/or the first event duration; in a case that the first event fails, reporting third indication information; and in a case that a second event occurs, reporting the second event;
   fifth indication information, used for indicating at least one of the following: reporting first information through a control plane, or reporting the first information through a user plane;
   sixth indication information, used for indicating: asking to measure a data transmission rate;
   one or more rate value ranges;
   one or more reporting conditions for triggering reporting of a data transmission rate;
   a reporting event of a data transmission rate, wherein the reporting event includes at least one of the following: the occurrence of the first event, the completion of the first event, the failure of the first event, and the occurrence of the second event; and
   a reporting cycle of a data transmission rate;
   wherein
   the second monitoring requirement information includes at least one of the following:
      tenth indication information, used for indicating: asking to measure a data transmission rate;
      one or more reporting triggering conditions for a data transmission rate;
      a reporting event of a data transmission rate, wherein the reporting event includes at least one of the following: the occurrence of the first event, the completion of the first event, the failure of the first event, and the occurrence of the second event; and
      a reporting cycle of a data transmission rate;
      an eleventh indication, used for indicating: asking to execute at least one of the following third operations: obtaining the first information, and monitoring the first information sent by a first target terminal; and
      a time period of executing the third operation.

In an implementation, the terminal handover event in the seventh event is a terminal handover event based on an N2 interface.

In an implementation, the sixth communication device can send the first monitoring requirement information, and/or the second monitoring requirement information to a seventh target device, and the seventh target device includes but is not limited to a first communication device (e.g. a RAN element, a CN element (e.g. an AMF and a UPF)), a second communication device (e.g. a UPF), and the like.

In an implementation, the sixth communication device can send the seventh event to an eighth target device, and the eighth target device includes but is not limited to a first communication device (e.g. a RAN element, a CN element (e.g. an AMF and a UPF)), a second communication device (e.g. a UPF), and the like.

The terminal handover, the data transmission interruption or rate decrease event, the first information, the first event, the second event, the first indication information, the second indication information, and the third indication information are as described in the embodiment of FIG. 2, and will not be elaborated here.

Optionally, the reporting condition includes at least one of the following: the rate is zero, the rate reaches any value range among N rate value ranges, and the rate is greater than or equal to M;
wherein
N is a natural number greater than or equal to 1; and
M is a value of the rate.

In an implementation, the N value ranges are one or more rate value ranges in the first monitoring requirement information.

In an implementation, the N value ranges are one or more rate value ranges in the second monitoring requirement information.

Optionally, the sixth communication device executes a seventh operation, which includes:
a first monitoring policy is obtained; and
the sixth communication device executes the seventh operation according to the first monitoring policy.

In an implementation, the sixth communication device can obtain the first monitoring policy from an eighth source device, and the eighth source device includes but is not limited to a fifth communication device (e.g. a PCF), and the like.

The first monitoring policy is as described in the embodiment of FIG. 6, and will not be elaborated here.

Optionally, After the step of sending the first monitoring requirement information, and/or sending the second monitoring requirement information, the seventh operation further includes at least one of the following:
obtaining the first information, second information, and related information of an event predicted to occur; and
sending the first information, the second information, and the related information of the event predicted to occur.

In an implementation, the sixth communication device can obtain the first information, the second information, and the related information of the event predicted to occur from a ninth source device, and the ninth source device includes but is not limited to a first communication device (e.g. a RAN element, a CN element (e.g. an AMF and a UPF)), a second communication device (e.g. a UPF), a fourth communication device (e.g. an NWDAF), and the like.

In an implementation, the sixth communication device can send the first information, the second information, and/or the related information of the event predicted to occur to a ninth target device, and the ninth target device includes but is not limited to a second communication device (e.g. a UPF), a CN element (e.g. a UPF, a PCF, an NEF, and an AF), and the like.

The first information is as described in the embodiment of FIG. 2, and will not be elaborated here.

The second information is as described in the embodiment of FIG. 3, and will not be elaborated here.

The related information of the event predicted to occur is as described in the embodiment of FIG. 5, and will not be elaborated here.

Through the embodiments of the present invention, an application server can determine whether to adjust the throughput rate and/or encoding efficiency of sent data and ensure the service experience of a user.

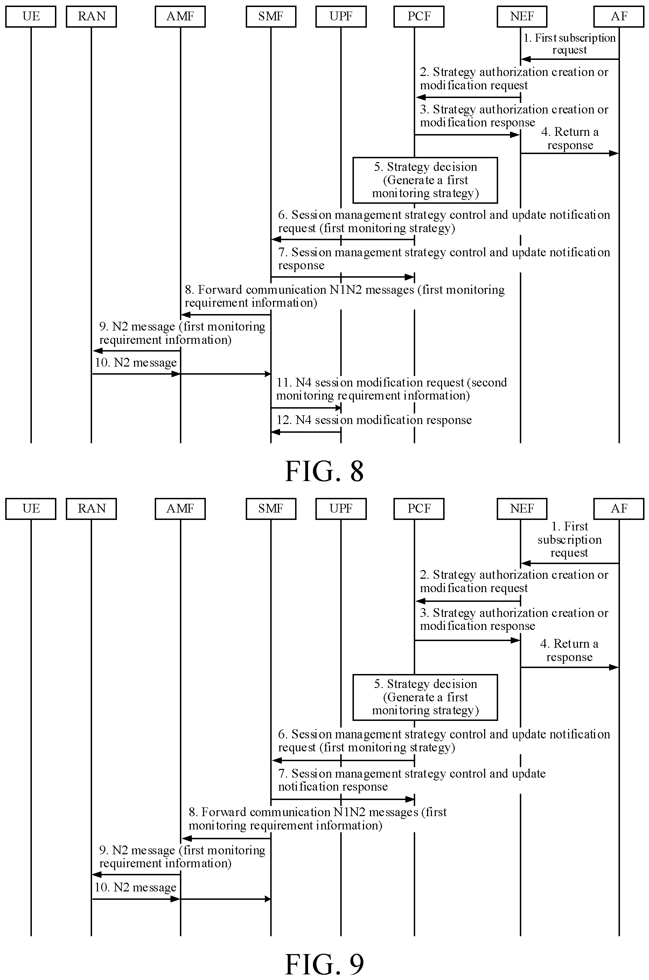

FIG. 8 is a schematic diagram I of implementation of an information control method according to an embodiment of the present invention. Application scenario 1 of the embodiments of the present invention mainly describes: In a scenario of handover or redirection in a RAN, an AF executes subscription through a control plane; the RAN reports information to a UPF through a user plane; and the UPF discloses second information. As shown in FIG. 8, the information control method includes the following steps:
Step 1: An AF sends a first subscription request to an NEF (specifically as described in the embodiment of FIG. 4).
Step 2 to Step 4: The NEF asks a PCF to determine a policy according to the first subscription request.
Step 5: The PCF generates a first monitoring policy (specifically as described in the embodiment of FIG. 6).
Step 6 to Step 7: The PCF sends the first monitoring policy to an SMF, and the SMF returns a response.
Step 8: The SMF generates first monitoring requirement information (specifically as described in the embodiment of FIG. 7), and the SMF sends the first monitoring requirement information to an AMF.
Step 9 to Step 10: The AMF sends the first monitoring requirement information to a RAN, and the AMF returns a response.
Step 11 to Step 12: The SMF generates second monitoring requirement information (specifically as described in the embodiment of FIG. 7); the SMF sends the second monitoring requirement information to the UPF; and the UPF returns a response.

After handover or redirection occurs, the RAN sends an uplink data packet to the UPF through a user plane, and a packet header of the uplink data packet contains first information (specifically as described in the embodiment of FIG. 2). When monitoring that the packet header of the uplink data packet contains the first information, the UPF obtains the first information, determines second information (specifically as described in the embodiment of FIG. 3), and sends the second information to the AF. After handover or redirection ends, the RAN sends an uplink data packet to the UPF through the user plane, and a packet header of the uplink data packet contains first information. When monitoring that the packet header of the uplink data packet contains the first information, the UPF obtains the first information, determines second information, and sends the second information to the AF.

Step 11 may be executed before Step 8.

Through the embodiments of the present invention, an application server can determine whether to adjust the throughput rate and/or encoding efficiency of sent data and ensure the service experience of a user.

FIG. 9 is a schematic diagram II of implementation of an information control method according to an embodiment of the present invention. Application scenario 2 of the embodiments of the present invention mainly describes: In a scenario of handover/redirection in a RAN, an AF executes subscription through a control plane, and the RAN reports to an APP Server (AF) through an L4S label of a user plane. As shown in FIG. 9, the information control method includes the following steps:
Step 1: An AF that supports L4S sends a first subscription request to an NEF (specifically as described in the embodiment of FIG. 4).
Step 2 to Step 4: The NEF asks a PCF to determine a policy according to the first subscription request.
Step 5: The PCF generates a first monitoring policy (specifically as described in the embodiment of FIG. 6).
Step 6 to Step 7: The PCF sends the first monitoring policy to an SMF, and the SMF returns a response.
Step 8: The SMF generates first monitoring requirement information (specifically as described in the embodiment of FIG. 7), and the SMF sends the first monitoring requirement information to an AMF.
Step 9 to Step 10: The AMF sends the first monitoring requirement information to a RAN, and the AMF returns a response.

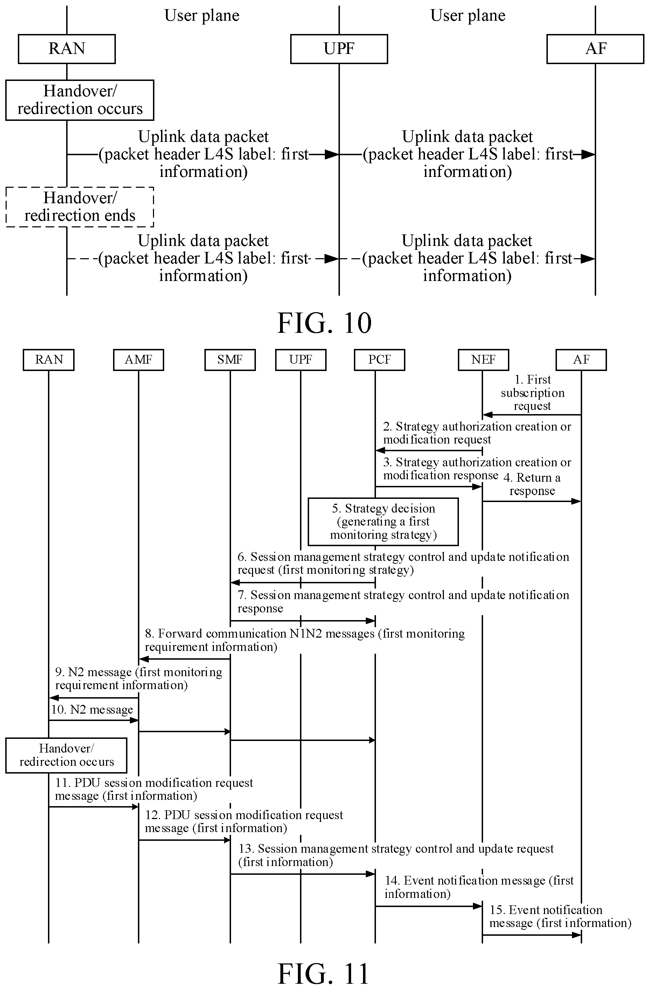

FIG. 10 is a schematic diagram III of implementation of an information control method according to an embodiment of the present invention. Referring to FIG. 10, after handover or redirection occurs, a RAN sends an uplink data packet to an APP Server (AF) through an L4S label of a user plane via a UPF, and an L4S packet header of the uplink data packet contains first information (specifically as described in the embodiment of FIG. 2).

After the handover or redirection ends, the RAN sends an uplink data packet to the APP Server (AF) through the L4S label of the user plane via the UPF, and an L4S packet header of the uplink data packet contains first information.

Through the embodiments of the present invention, an application server can determine whether to adjust the throughput rate and/or encoding efficiency of sent data and ensure the service experience of a user.

FIG. 11 is a schematic diagram IV of implementation of an information control method according to an embodiment of the present invention. Application scenario 3 of the embodiments of the present invention mainly describes: In a scenario of handover/redirection in a RAN, an AF executes subscription through a control plane, and the RAN reports to an AF through the control plane. As shown in FIG. 11, the information control method includes the following steps:
Step 1: An AF sends a first subscription request to an NEF (specifically as described in the embodiment of FIG. 4).
Step 2 to Step 4: The NEF asks a PCF to determine a policy according to the first subscription request.
Step 5: The PCF generates a first monitoring policy (specifically as described in the embodiment of FIG. 6).
Step 6 to Step 7: The PCF sends the first monitoring policy to an SMF, and the SMF returns a response.
Step 8: The SMF generates first monitoring requirement information (specifically as described in the embodiment of FIG. 7), and the SMF sends the first monitoring requirement information to an AMF.
Step 9 to Step 10: The AMF sends the first monitoring requirement information to a RAN, and the AMF returns a response.
Step 11 to Step 15: After handover or redirection occurs, the RAN sends first information to an AMF-SMF-PCF-NEF-AF (specifically as described in the embodiment of FIG. 2)

Through the embodiments of the present invention, an application server can determine whether to adjust the throughput rate and/or encoding efficiency of sent data and ensure the service experience of a user.

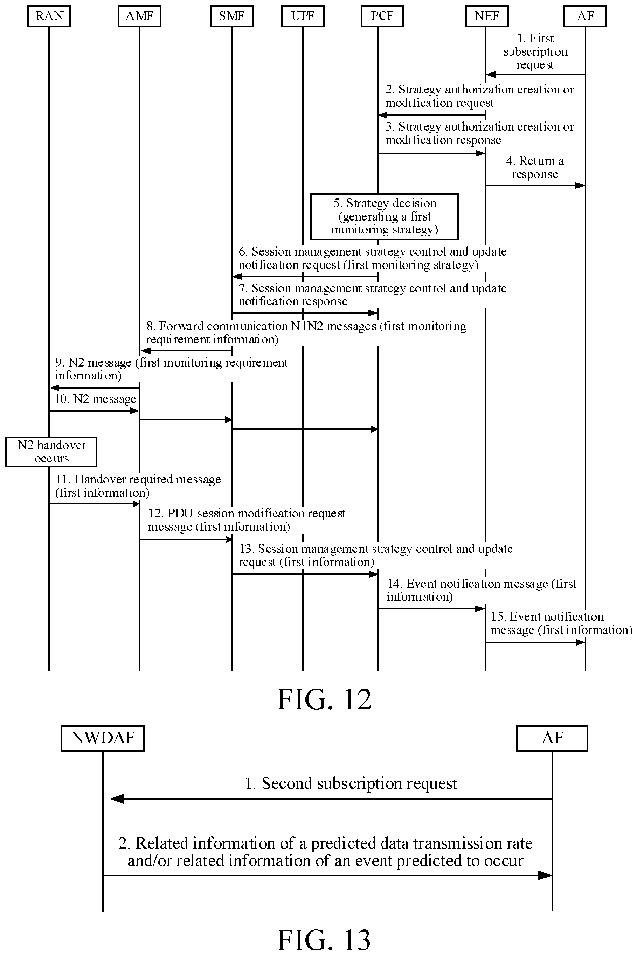

FIG. 12 is a schematic diagram V of implementation of an information control method according to an embodiment of the present invention. Application scenario 4 of the embodiments of the present invention mainly describes: In an N2 handover scenario, an AF executes subscription through a control plane, and the RAN reports to an AF through the control plane. As shown in FIG. 12, the information control method includes the following steps:
Step 1: An AF sends a first subscription request to an NEF (specifically as described in the embodiment of FIG. 4).
Step 2 to Step 4: The NEF asks a PCF to determine a policy according to the first subscription request.
Step 5: The PCF generates a first monitoring policy (specifically as described in the embodiment of FIG. 6).
Step 6 to Step 7: The PCF sends the first monitoring policy to an SMF, and the SMF returns a response.
Step 8: The SMF generates first monitoring requirement information (specifically as described in the embodiment of FIG. 7), and the SMF sends the first monitoring requirement information to an AMF.
Step 9 to Step 10: The AMF sends the first monitoring requirement information to a RAN, and the AMF returns a response.
Step 11 to Step 15: After N2 handover occurs, the RAN sends first information to an AMF-SMF-PCF-NEF-AF (specifically as described in the embodiment of FIG. 2). A difference from the embodiment of in FIG. 11 is that a handover required (Handover Required) message of step 11 represents that the N2 handover occurs.

Through the embodiments of the present invention, an application server can determine whether to adjust the throughput rate and/or encoding efficiency of sent data and ensure the service experience of a user.

FIG. 13 is a schematic diagram VI of implementation of an information control method according to an embodiment of the present invention. Application scenario 5 of the embodiments of the present invention mainly describes a process that an AF subscribes predicted information from an AWDAF. As shown in FIG. 13, the information control method includes the following steps:
Step 1: An AF sends a second subscription request to an NWDAF (specifically as described in the embodiments of FIG. 4 and FIG. 5).
Step 2: After executing prediction according to the second subscription request, the NWDAF sends related information of a predicted data transmission rate and/or related information of an event predicted to occur (specifically as described in the embodiment of FIG. 5).

Through the embodiments of the present invention, an application server can determine whether to adjust the throughput rate and/or encoding efficiency of sent data and ensure the service experience of a user.

An executive body of the information control method provided by the embodiments of the present invention may be an information control apparatus. In the embodiments of the present invention, using the information control apparatus to perform the information control method is taken as an example to explain the information controls apparatus provided by the embodiments of the present invention.

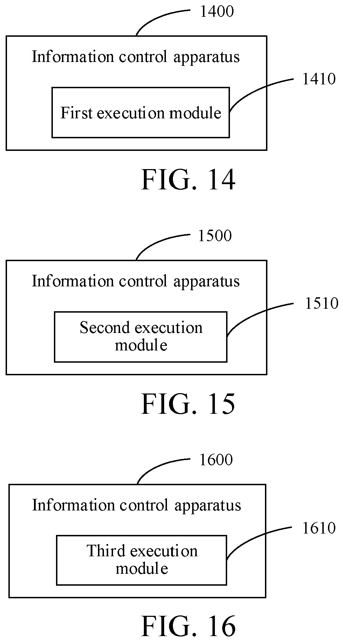

FIG. 14 is a schematic structural diagram I of an information control apparatus according to an embodiment of the present invention. As shown in FIG. 14, the embodiments of the present invention provide an information control apparatus 1400, which can be applied to a first communication device and includes:
a first execution module 1410, configured to execute a first operation,
wherein the first operation includes at least one of the following operations:
   measuring a data transmission rate; and
   sending first information.

The first information includes at least one of the following:
information used for indicating a data transmission rate;
a first event, including at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
first indication information, wherein the first indication information is used for indicating beginning or occurrence of the first event;
second indication information, wherein the second indication information is used for indicating completion of the first event;
third indication information, wherein the third indication information is used for indicating a failure of the first event;
a first event duration; and
a second event, including at least one of the following: a data transmission recovery event, an event in which the data transmission rate is no longer zero, and an event in which connection between a terminal and a network is recovered.

The information control apparatus in the embodiments of the present invention may be an electronic device, for example, an electronic device having an operating system, or a component in an electronic device, such as an integrated circuit or a chip. The electronic device may be a terminal or a device other than a terminal. Exemplarily, the terminal may include, but is not limited to, the types of the terminal 11 listed above, and the other device may be a server, a network attached storage (Network Attached Storage, NAS), or the like. The embodiments of the present invention do not impose a specific limitation on this.

The information control apparatus in the embodiments of the present invention can be an apparatus with an operating system. The operating system may be an Android (Android) operating system, may be an ios operating system, or may be another possible operating system, and is not specifically limited in the embodiments of the present invention.

Optionally, the terminal transfer includes at least one of the following: terminal handover, terminal redirection, session recreation, and terminal re-registration;
and/or
the terminal transfer event includes at least one of the following: a terminal transfer event in which IP continuity is maintained, and a terminal transfer event in which IP continuity is not maintained;
   and/or
the event in which connection between a terminal and a network is cut off includes at least one of the following events: the terminal actively asking to release the connection with the network, and a radio link failure between the terminal and the network.

Optionally, the terminal transfer event in which IP continuity is maintained includes at least one of the following events: the terminal transfer event in which IP continuity is maintained includes at least one of the following events: terminal handover in which the IP continuity of a terminal is maintained, terminal redirection in which the IP continuity of a terminal is maintained, session recreation in which the IP continuity of a terminal is maintained, and terminal re-registration in which the IP continuity of a terminal is maintained;
and/or
the terminal transfer event in which IP continuity is not maintained includes at least one of the following: terminal handover in which the IP continuity of a terminal is not maintained, terminal redirection in which the IP continuity of a terminal is not maintained, session recreation in which the IP continuity of a terminal is not maintained, and terminal re-registration in which the IP continuity of a terminal is not maintained.

Optionally, the data transmission interruption or rate decrease event includes at least one of the following: a first transmission interruption or rate decrease event and a second transmission interruption or rate decrease event;
wherein
the first transmission interruption or rate decrease event includes at least one of the following: data transmission interruption caused by a third event, temporary data transmission interruption, or a data transmission interruption or rate decrease event expected to be recovered;
the third event includes at least one of the following: a terminal transfer event in which IP continuity is maintained, and a terminal transfer event;
the second transmission interruption or rate decrease event includes at least one of the following: data transmission interruption or rate decrease caused by a fourth event, a data transmission interruption or rate decrease event with an unknown recovery possibility, a data transmission interruption or rate decrease event in which IP continuity is not maintained, and an abnormal data transmission interruption or rate decrease event; and
the fourth event includes at least one of the following: an event in which an IP address of a terminal changes, a terminal transfer event in which an IP address of a terminal changes, an event in which connection between a terminal and a network is cut off, and an event of a radio link failure between a terminal and a network.

Optionally, for an IP-based terminal service, the third event includes at least one of the following: a terminal transfer event, and a terminal transfer event in which IP continuity is maintained;
and/or
for an ethernet-based terminal service, the third event includes at least one of the following: a terminal transfer event.

Optionally, the action of executing a first operation includes:
obtaining first monitoring requirement information; and
executing the first operation according to the first monitoring requirement information;
the first monitoring requirement information includes at least one of the following:
   fourth indication information, used for indicating at least one of the following: in a case that the first event occurs, reporting the first event, the first indication information, and/or the first event duration; in a case that the first event ends, reporting second indication information and/or the first event duration; in a case that the first event fails, reporting the third indication information; and in a case that the second event occurs, reporting the second event;
   fifth indication information, used for indicating at least one of the following: reporting the first information through a control plane, or reporting the first information through a user plane;
   sixth indication information, used for indicating: asking to measure a data transmission rate;
   one or more rate value ranges;
   one or more reporting conditions for triggering reporting of a data transmission rate;
   a reporting event of a data transmission rate, wherein the reporting event includes at least one of the following: the occurrence of the first event, the completion of the first event, the failure of the first event, and the occurrence of the second event; and
   a reporting cycle of a data transmission rate.

Optionally, the reporting condition includes at least one of the following: the rate is zero, the rate reaches any value range among N rate value ranges, and the rate is greater than or equal to M;
wherein
N is a natural number greater than or equal to 1; and
M is a value of the rate.

Optionally, sending the first transmission interruption or rate decrease event, a first indication corresponding to the first transmission interruption event, and/or, a duration corresponding to the first transmission interruption event includes: In a case that a first condition is satisfied, the first communication device sends the first indication information corresponding to the first transmission interruption event, and/or, the duration corresponding to the first transmission interruption event.

The first condition includes at least one of the following: the third event occurs, and the data transmission interruption or rate decrease caused by the third event occurs.

Optionally, sending the second transmission interruption or rate decrease event, a first indication corresponding to the second transmission interruption event, and/or, a duration corresponding to the second transmission interruption event includes: In a case that a second condition is satisfied, the first communication device sends the second transmission interruption event, the first indication corresponding to the second transmission interruption event, and/or, the duration corresponding to the second transmission interruption event.

The second condition includes at least one of the following: the fourth event occurs, and the data transmission interruption or rate decrease caused by the fourth event occurs.

Optionally, the information used for indicating a data transmission rate includes at least one of the following:
in a case that a third condition is satisfied, the first communication device sends the information used for indicating a data transmission rate;
the third condition includes at least one of the following:
   the measured data transmission rate is determined to satisfy the reporting condition;
   the first event occurs;
   the first event is completed;
   the first event fails; and
   the second event occurs.

Optionally, the sending first information includes at least one of the following:

The first communication device sends an uplink data packet, wherein a packet header of the uplink data packet contains the first information; and
the first communication device sends a control plane message, wherein the control plane message contains the first information.

Optionally, the packet header of the uplink data packet includes at least one of the following: a GTP packet header and a service application layer packet header.

Through the embodiments of the present invention, an application server can determine whether to adjust the throughput rate and/or encoding efficiency of sent data and ensure the service experience of a user.

FIG. 15 is a schematic structural diagram II of an information control apparatus according to an embodiment of the present invention. As shown in FIG. 15, the embodiments of the present invention provide an information control apparatus 1500, which can be applied to a second communication device and includes:
a second execution module 1510, configured to execute a second operation, wherein the second operation includes at least one of the following operations:
obtaining first information;
determining second information; and
sending the second information;
wherein
the first information includes at least one of the following:
   information used for indicating a data transmission rate;
   a first event, including at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
   first indication information, wherein the first indication information is used for indicating beginning or occurrence of the first event;
   second indication information, wherein the second indication information is used for indicating completion of the first event;
   third indication information, wherein the third indication information is used for indicating a failure of the first event;
   a first event duration; and
   a second event, including at least one of the following: a data transmission recovery event, an event in which the data transmission rate is no longer zero, and an event in which connection between a terminal and a network is recovered;
   wherein the data transmission rate in the first information is a data transmission rate measured by a first communication device;
   the second information includes at least one of the following:
      information used for indicating a data transmission rate;
      a fifth event, including at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
      seventh indication information, wherein the seventh indication information is used for indicating beginning or occurrence of the fifth event;
      eighth indication information, wherein the eighth indication information is used for indicating completion of the fifth event;
      ninth indication information, wherein the ninth indication information is used for indicating a failure of the fifth event; and
      a fifth event duration; and
      a sixth event, including at least one of the following: a data transmission recovery event, an event in which the data transmission rate is no longer zero, and an event in which connection between a terminal and a network is recovered.

The information control apparatus in the embodiments of the present invention may be an electronic device, for example, an electronic device having an operating system, or a component in an electronic device, such as an integrated circuit or a chip. The electronic device may be a terminal or a device other than a terminal. Exemplarily, the terminal may include, but is not limited to, the types of the terminal 11 listed above, and the other device may be a server, a network attached storage (Network Attached Storage, NAS), or the like. The embodiments of the present invention do not impose a specific limitation on this.

The information control apparatus in the embodiments of the present invention can be an apparatus with an operating system. The operating system may be an Android (Android) operating system, may be an ios operating system, or may be another possible operating system, and is not specifically limited in the embodiments of the present invention.

Optionally, content of the second information includes at least one of the following:
information self-determined by the second communication device;
information in the first information; and
information determined by the second communication device according to the first information.

The data transmission rate in the second information is a data transmission rate measured by the second communication device or the data transmission rate contained in the first information;
the events in the fifth event include at least one of the following: a first event, a fifth event determined according to the first event, and a self-determined fifth event;
the events in the sixth event include at least one of the following: a second event, a sixth event determined according to the second event, and a self-determined sixth event; and
the fifth event duration is a fifth event duration determined by the second communication device or the first event duration contained in the first information.

Optionally, the second information determined by the second communication device according to the first information includes at least one of the following: an operation for determining the fifth event according to the first event, including at least one of the following:
in a case that the first information includes the terminal transfer event, and the second communication device determines that the IP address is maintained unchanged, the fifth event determined by the second communication device includes: the terminal transfer event in which IP continuity is maintained;
in a case that the first information includes the terminal transfer event, and the second communication device determines that the IP address is maintained unchanged and the data transmission rate is zero or decreases, the fifth event determined by the second communication device includes: the data transmission interruption or rate decrease event in which IP continuity is maintained; and
in a case that the first information includes the data transmission interruption or rate decrease event, and the second communication device determines that the IP address is maintained unchanged, the fifth event determined by the second communication device includes: the data transmission interruption or rate decrease event in which IP continuity is maintained; and
in a case that the first information includes the data transmission interruption or rate decrease event caused by terminal transfer, and the second communication device determines that the IP address is maintained unchanged, the fifth event determined by the second communication device includes the data transmission interruption or rate decrease event, caused by terminal transfer, in which IP continuity is maintained.

Optionally, the action of executing a second operation includes:
obtaining second monitoring requirement information; and
executing the second operation according to the second monitoring requirement information;
wherein
the second monitoring requirement information includes at least one of the following:
   tenth indication information, used for indicating: asking to measure a data transmission rate;
   one or more rate value ranges;
   one or more reporting conditions for triggering reporting of a data transmission rate;
   a reporting event of a data transmission rate, wherein the reporting event includes at least one of the following: the occurrence of the first event, the completion of the first event, the failure of the first event, and the occurrence of the second event;
   a reporting cycle of a data transmission rate;
   eleventh indication information, used for indicating: asking to execute at least one of the following third operations: obtaining the first information, and monitoring the first information sent by a first target terminal; and
   a time period of executing the third operation.

Optionally, the reporting condition includes at least one of the following: the rate is zero, the rate reaches any value range among N rate value ranges, and the rate is greater than or equal to M;
wherein
N is a natural number greater than or equal to 1; and
M is a value of the rate.

Optionally, the obtaining the first information includes at least one of the following:

The second communication device receives an uplink data packet, wherein a packet header of the uplink data packet contains the first information; ands
the second communication device receives a control plane message, wherein the control plane message contains the first information.

Optionally, the packet header of the uplink data packet includes at least one of the following: a GTP packet header and a service application layer packet header.

Through the embodiments of the present invention, an application server can determine whether to adjust the throughput rate and/or encoding efficiency of sent data and ensure the service experience of a user.

FIG. 16 is a schematic structural diagram III of an information control apparatus according to an embodiment of the present invention. As shown in FIG. 16, the embodiments of the present invention provide an information control apparatus 1600, which can be applied to a third communication device and includes:
a third execution module 1610, configured to execute a fourth operation, wherein the fourth operation includes at least one of the following operations:
sending a first subscription request; and
sending a second subscription request;
wherein the first subscription request includes at least one of the following:
   information of a terminal;
   a data transmission rate of a data flow;
   one or more rate value ranges;
   one or more reporting conditions for triggering reporting of a data transmission rate;
   a reporting event of a data transmission rate, wherein the reporting event includes at least one of the following: occurrence of a first subscription event, completion of the first subscription event, a failure of the first subscription event, and occurrence of a second subscription event;
   a reporting cycle of a data transmission rate;
   a first subscription event;
   a second subscription event; and
   twelfth indication information, used for indicating at least one of the following: in a case that a first event occurs, reporting the first event, the occurrence of the first event, and/or a first event duration; in a case that the first event ends, reporting the end of the first event and/or the first event duration; in a case that the first event fails, reporting a first event failure indication; and in a case that a second event occurs, reporting the second event;
   wherein the first subscription event includes at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
   the second subscription event includes at least one of the following: a data transmission recovery event, an event in which the data transmission rate is no longer zero, and an event in which connection between a terminal and a network is recovered;
   wherein the second subscription request includes at least one of the following: the information of the terminal, description information of the data flow, related subscription information of a predicted data transmission rate, and related subscription information of a predicted event;
   the related subscription information of the predicted data transmission rate includes at least one of the following: a first target time point, a first target time period, a first target region range, a first target location, and information used for indicating: asking to predict a data transmission rate; and
   the related subscription information of the predicted event includes at least one of the following: a second target time period, a second target region range, and an event asked to be predicted.
   the event asked to be predicted includes at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained.

The information control apparatus in the embodiments of the present invention may be an electronic device, for example, an electronic device having an operating system, or a component in an electronic device, such as an integrated circuit or a chip. The electronic device may be a terminal or a device other than a terminal. Exemplarily, the terminal may include, but is not limited to, the types of the terminal 11 listed above, and the other device may be a server, a network attached storage (Network Attached Storage, NAS), or the like. The embodiments of the present invention do not impose a specific limitation on this.

The information control apparatus in the embodiments of the present invention can be an apparatus with an operating system. The operating system may be an Android (Android) operating system, may be an ios operating system, or may be another possible operating system, and is not specifically limited in the embodiments of the present invention.

Optionally, the reporting condition includes at least one of the following: the rate is zero, the rate reaches any value range among N rate value ranges, and the rate is greater than or equal to M;
wherein
N is a natural number greater than or equal to 1; and
M is a value of the rate.

Optionally, the data transmission rate of the data flow is one of the following: a measured data transmission rate, related information of a predicted data transmission rate, and related information of an event predicted to occur.

Optionally, the data transmission interruption or rate decrease event includes at least one of the following: a first transmission interruption or rate decrease event and a second transmission interruption or rate decrease event;
wherein
the first transmission interruption or rate decrease event includes at least one of the following: data transmission interruption caused by a third event, temporary data transmission interruption, or a data transmission interruption or rate decrease event expected to be recovered;
the third event includes at least one of the following: a terminal transfer event in which IP continuity is maintained, and a terminal transfer event;
the second transmission interruption or rate decrease event includes at least one of the following: data transmission interruption or rate decrease caused by a fourth event, a data transmission interruption or rate decrease event with an unknown recovery possibility, a data transmission interruption or rate decrease event in which IP continuity is not maintained, and an abnormal data transmission interruption or rate decrease event; and
the fourth event includes at least one of the following: an event in which an IP address of a terminal changes, a terminal transfer event in which an IP address of a terminal changes, an event in which connection between a terminal and a network is cut off, and an event of a radio link failure between a terminal and a network.

Optionally, for an IP-based terminal service, the third event includes at least one of the following: a terminal transfer event, and a terminal transfer event in which IP continuity is maintained;
and/or
for an ethernet-based terminal service, the third event includes at least one of the following: a terminal transfer event.

Optionally, after sending a first subscription request, the fourth operation further includes at least one of the following: obtaining first information and/or second information, and obtaining the related information of the event predicted to occur.

Optionally, the obtaining first information and/or second information includes:
receiving an uplink data packet, wherein a packet header of the uplink data packet contains the first information and/or the second information; and
receiving a control plane message, wherein the control plane message contains the first information and/or the second information.

Through the embodiments of the present invention, an application server can determine whether to adjust the throughput rate and/or encoding efficiency of sent data and ensure the service experience of a user.

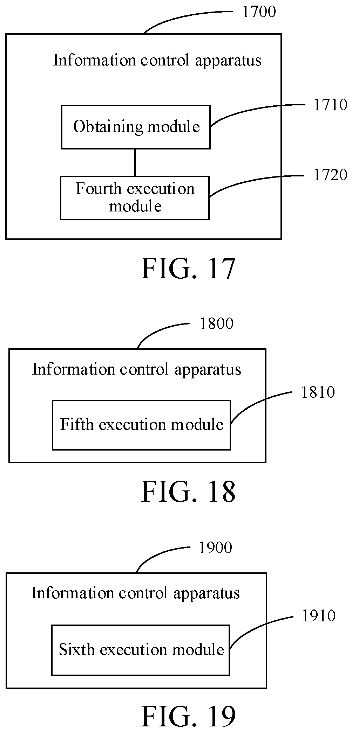

FIG. 17 is a schematic structural diagram IV of an information control apparatus according to an embodiment of the present invention. As shown in FIG. 17, the embodiments of the present invention provide an information control apparatus 1700, which can be applied to a fourth communication device and includes:
an obtaining module 1710, configured to obtain a second subscription request, wherein the second subscription request includes at least one of the following: information of a terminal, description information of a data flow, related subscription information of a predicted data transmission rate, and related subscription information of a predicted event;
the related subscription information of the predicted data transmission rate includes at least one of the following: a first target time point, a first target time period, a first target region range, a first target location, and information used for indicating: asking to predict a data transmission rate; and
the related subscription information of the predicted event includes at least one of the following: a second target time period, a second target region range, and an event asked to be predicted; and
a fourth execution module 1720, configured to execute a fifth operation according to a first subscription request, wherein the fifth operation includes at least one of the following operations:
   executing prediction of a data transmission rate;
   executing prediction of whether the event asked to be predicted occurs or does not occur;
   sending related information of one or more predicted data transmission rates; and
   sending related information of one or more events predicted to occur.

The related information of the predicted data transmission rate includes at least one of the following:
first time;
a first territory; and
information used for indicating the predicted data transmission rate.

The related information of the event predicted to occur includes at least one of the following:
second time;
a second address; and
the event predicted to occur.

The information control apparatus in the embodiments of the present invention may be an electronic device, for example, an electronic device having an operating system, or a component in an electronic device, such as an integrated circuit or a chip. The electronic device may be a terminal or a device other than a terminal. Exemplarily, the terminal may include, but is not limited to, the types of the terminal 11 listed above, and the other device may be a server, a network attached storage (Network Attached Storage, NAS), or the like. The embodiments of the present invention do not impose a specific limitation on this.

The information control apparatus in the embodiments of the present invention can be an apparatus with an operating system. The operating system may be an Android (Android) operating system, may be an ios operating system, or may be another possible operating system, and is not specifically limited in the embodiments of the present invention.

Optionally, the predicted data transmission rate includes at least one of the following:
a predicted data transmission rate at the first time and/or the first territory;
a predicted data transmission rate of the data flow; and
a predicted data transmission rate of the terminal.

Optionally, the predicted data transmission rate at the first time and/or the first territory includes:
a predicted data transmission rate of the data flow of the terminal at the first time and/or the first territory.

Optionally, the event predicted to occur includes at least one of the following:
a predicted event occurring at first time and/or the first territory;
a predicted event occurring at the data flow; and
a predicted event occurring at the terminal.

Optionally, the predicted event occurring at first time and/or the first territory includes:
a predicted event occurring at the data flow of the terminal at the first time and/or the first territory.

Through the embodiments of the present invention, an application server can determine whether to adjust the throughput rate and/or encoding efficiency of sent data and ensure the service experience of a user.

FIG. 18 is a schematic structural diagram V of an information control apparatus according to an embodiment of the present invention. As shown in FIG. 18, the embodiments of the present invention provide an information control apparatus 1800, which can be applied to a fifth communication device and includes:
a fifth execution module 1810, configured to execute a sixth operation, wherein the sixth operation includes at least one of the following operations:
generating a first monitoring policy; and
sending the first monitoring policy;
wherein
the first monitoring policy includes at least one of the following:
   thirteenth indication information, used for indicating at least one of the following: in a case that a first event occurs, reporting the first event, first indication information, and/or a first event duration; in a case that the first event ends, reporting second indication information and/or the first event duration; in a case that the first event fails, reporting third indication information; and in a case that a second event occurs, reporting the second event;
   fourteenth indication information, used for indicating at least one of the following: reporting the first information through a control plane, or reporting the first information through a user plane;
   fifteenth indication information, used for indicating: asking to measure a data transmission rate;
   one or more rate value ranges;
   one or more reporting conditions for triggering reporting of a data transmission rate;
   a reporting event of a data transmission rate, wherein the reporting event includes at least one of the following: the occurrence of the first event, the completion of the first event, the failure of the first event, and the occurrence of the second event; and
   a reporting cycle of a data transmission rate.

The information control apparatus in the embodiments of the present invention may be an electronic device, for example, an electronic device having an operating system, or a component in an electronic device, such as an integrated circuit or a chip. The electronic device may be a terminal or a device other than a terminal. Exemplarily, the terminal may include, but is not limited to, the types of the terminal 11 listed above, and the other device may be a server, a network attached storage (Network Attached Storage, NAS), or the like. The embodiments of the present invention do not impose a specific limitation on this.

The information control apparatus in the embodiments of the present invention can be an apparatus with an operating system. The operating system may be an Android (Android) operating system, may be an ios operating system, or may be another possible operating system, and is not specifically limited in the embodiments of the present invention.

Optionally, the reporting condition includes at least one of the following: the rate is zero, the rate reaches any value range among N rate value ranges, and the rate is greater than or equal to M;
wherein
N is a natural number greater than or equal to 1; and
M is a value of the rate.

Optionally, the action of executing a sixth operation includes:
obtaining a first subscription request; and
executing the sixth operation according to the first subscription request.

Optionally, after the step of sending the first monitoring policy, the sixth operation further includes at least one of the following:
obtaining the first information, second information, and related information of an event predicted to occur; and
sending the first information, the second information, and the related information of the event predicted to occur.

Through the embodiments of the present invention, an application server can determine whether to adjust the throughput rate and/or encoding efficiency of sent data and ensure the service experience of a user.

FIG. 19 is a schematic structural diagram VI of an information control apparatus according to an embodiment of the present invention. As shown in FIG. 19, the embodiments of the present invention provide an information control apparatus 1900, which can be applied to a sixth communication device and includes:
a sixth execution module 1910, configured to execute a seventh operation, wherein the seventh operation includes at least one of the following operations:
generating first monitoring requirement information, and/or second monitoring requirement information;
sending the first monitoring requirement information, and/or sending the second monitoring requirement information;
monitoring a seventh event; and
sending the seventh event;
wherein
the seventh event includes at least one of the following: a terminal handover event, a data transmission interruption or rate decrease event, an event in which an IP address of a terminal changes, a terminal handover event in which IP continuity is maintained, a data transmission interruption or rate decrease event in which IP continuity is maintained, a data transmission interruption or rate decrease event caused by terminal handover, and a data transmission interruption or rate decrease event, caused by terminal handover, in which IP continuity is maintained;
wherein
the first monitoring requirement information includes at least one of the following:
   fourth indication information, used for indicating at least one of the following: in a case that a first event occurs, reporting the first event, first indication information, and/or a first event duration; in a case that the first event ends, reporting second indication information and/or the first event duration; in a case that the first event fails, reporting third indication information; and in a case that a second event occurs, reporting the second event;
   fifth indication information, used for indicating at least one of the following: reporting the first information through a control plane, or reporting the first information through a user plane;
   sixth indication information, used for indicating: asking to measure a data transmission rate;
   one or more rate value ranges;
   one or more reporting conditions for triggering reporting of a data transmission rate;
   a reporting event of a data transmission rate, wherein the reporting event includes at least one of the following: the occurrence of the first event, the completion of the first event, the failure of the first event, and the occurrence of the second event; and
   a reporting cycle of a data transmission rate;
   wherein
   the second monitoring requirement information includes at least one of the following:
      tenth indication information, used for indicating: asking to measure a data transmission rate;
      one or more reporting triggering conditions for a data transmission rate;
      a reporting event of a data transmission rate, wherein the reporting event includes at least one of the following: the occurrence of the first event, the completion of the first event, the failure of the first event, and the occurrence of the second event;
      a reporting cycle of a data transmission rate;
      an eleventh indication, used for indicating: asking to execute at least one of the following third operations: obtaining the first information, and monitoring the first information sent by a first target terminal; and
      a time period of executing the third operation.

The information control apparatus in the embodiments of the present invention may be an electronic device, for example, an electronic device having an operating system, or a component in an electronic device, such as an integrated circuit or a chip. The electronic device may be a terminal or a device other than a terminal. Exemplarily, the terminal may include, but is not limited to, the types of the terminal 11 listed above, and the other device may be a server, a network attached storage (Network Attached Storage, NAS), or the like. The embodiments of the present invention do not impose a specific limitation on this.

The information control apparatus in the embodiments of the present invention can be an apparatus with an operating system. The operating system may be an Android (Android) operating system, may be an ios operating system, or may be another possible operating system, and is not specifically limited in the embodiments of the present invention.

Optionally, the reporting condition includes at least one of the following: the rate is zero, the rate reaches any value range among N rate value ranges, and the rate is greater than or equal to M;
wherein
N is a natural number greater than or equal to 1; and
M is a value of the rate.

Optionally, the action of executing a seventh operation includes:
obtaining a first monitoring policy; and
executing the seventh operation according to the first monitoring policy.

Optionally, after the step of sending the first monitoring requirement information, and/or sending the second monitoring requirement information, the seventh operation further includes at least one of the following:
obtaining the first information, second information, and related information of an event predicted to occur; and
sending the first information, the second information, and the related information of the event predicted to occur.

Through the embodiments of the present invention, an application server can determine whether to adjust the throughput rate and/or encoding efficiency of sent data and ensure the service experience of a user.

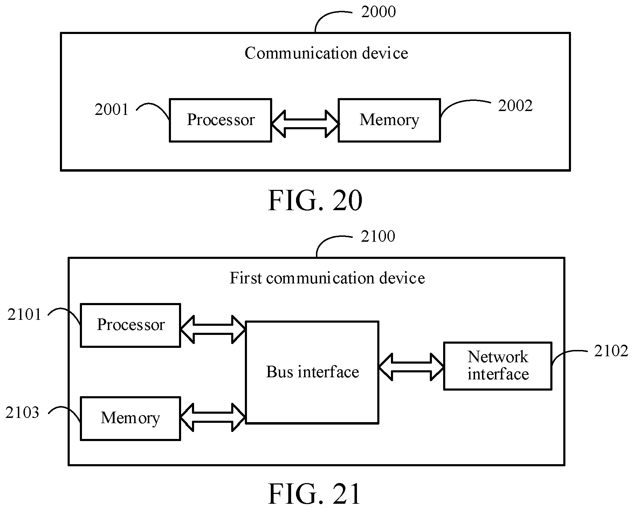

FIG. 20 is a schematic structural diagram of a communication device according to an embodiment of the present invention. As shown in FIG. 20, the embodiments of the present invention further provide a communication device 2000, including a processor 2001 and a memory 2002. The memory 2002 stores programs or instructions runnable on the processor 2001. For example, when the communication device 2000 is a first communication device, the programs or instructions, when run or executed by the processor 2001, implement all the steps of the above information control method embodiment, and can achieve the same technical effects. When the communication device 2000 is a second communication device, the program or instructions, when run or executed by the processor 2001, implements or implement all the steps of the above information control method embodiment, and can achieve the same technical effects. When the communication device 2000 is a third communication device, the program or instructions, when run or executed by the processor 2001, implements or implement all the steps of the above information control method embodiment, and can achieve the same technical effects. When the communication device 2000 is a fourth communication device, the program or instructions, when run or executed by the processor 2001, implements or implement all the steps of the above information control method embodiment, and can achieve the same technical effects. When the communication device 2000 is a fifth communication device, the program or instructions, when run or executed by the processor 2001, implements or implement all the steps of the above information control method embodiment, and can achieve the same technical effects. When the communication device 2000 is a sixth communication device, the program or instructions, when run or executed by the processor 2001, implements or implement all the steps of the above information control method embodiment, and can achieve the same technical effects. Details are omitted here for brevity.

The embodiments of the present invention provide a first communication device. FIG. 21 is a schematic structural diagram of a first communication device according to an embodiment of the present invention. As shown in FIG. 21, the first communication device 2100 includes: a processor 2101, a network interface 2102, and a memory 2103. The network interface 2102 is, for example, a common public radio interface (common public radio interface, CPRI).

Specifically, the first communication device 2100 of the embodiments of the present invention further includes: instructions or programs stored on the memory 2103 and runnable on the processor 2101. The processor 2101 calls the instructions or programs in the memory 2103 to perform the method performed by the various modules shown in FIG. 14 and achieve the same technical effects, details of which are omitted here for brevity.

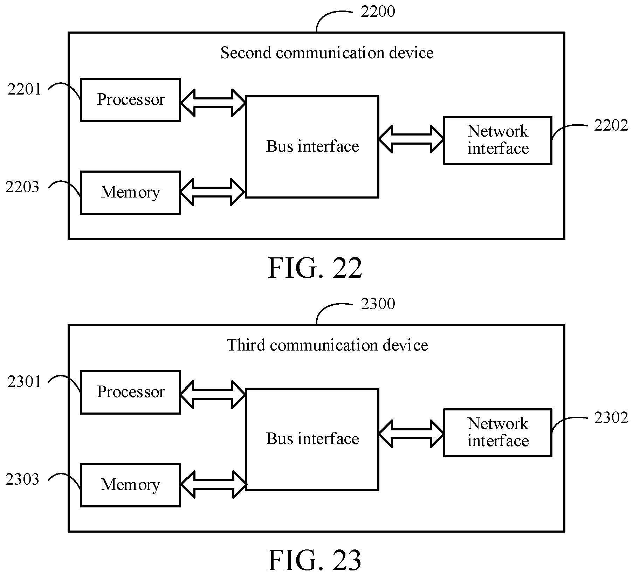

The embodiments of the present invention provide a second communication device. FIG. 22 is a schematic structural diagram of a second communication device according to an embodiment of the present invention. As shown in FIG. 22, the second communication device 2200 includes: a processor 2201, a network interface 2202, and a memory 2203. The network interface 2202 is, for example, a common public radio interface (common public radio interface, CPRI).

Specifically, the second communication device 2200 of the embodiments of the present invention further includes: instructions or programs stored on the memory 2203 and runnable on the processor 2201. The processor 2201 calls the instructions or programs in the memory 2203 to perform the method performed by the various modules shown in FIG. 15 and achieve the same technical effects, details of which are omitted here for brevity.

The embodiments of the present invention provide a third communication device. FIG. 23 is a schematic structural diagram of a third communication device according to an embodiment of the present invention. As shown in FIG. 23, the third communication device 2300 includes: a processor 2301, a network interface 2302, and a memory 2303. The network interface 2302 is, for example, a common public radio interface (common public radio interface, CPRI).

Specifically, the third communication device 2300 of the embodiments of the present invention further includes: instructions or programs stored on the memory 2303 and runnable on the processor 2301. The processor 2301 calls the instructions or programs in the memory 2303 to perform the method performed by the various modules shown in FIG. 16 and achieve the same technical effects. To avoid repetition, details are not elaborated here again.

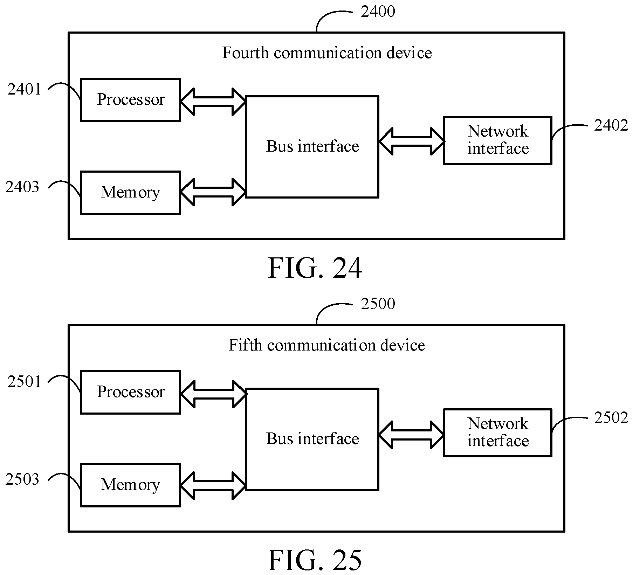

The embodiments of the present invention provide a fourth communication device. FIG. 24 is a schematic structural diagram of a fourth communication device according to an embodiment of the present invention. As shown in FIG. 24, the fourth communication device 2400 includes: a processor 2401, a network interface 2402, and a memory 2403. The network interface 2402 is, for example, a common public radio interface (common public radio interface, CPRI).

Specifically, the fourth communication device 2400 of the embodiments of the present invention further includes: instructions or programs stored on the memory 2403 and runnable on the processor 2401. The processor 2401 calls the instructions or programs in the memory 2403 to perform the method performed by the various modules shown in FIG. 17 and achieve the same technical effects. To avoid repetition, details are not elaborated here again.

The embodiments of the present invention provide a fifth communication device. FIG. 25 is a schematic structural diagram of a fifth communication device according to an embodiment of the present invention. As shown in FIG. 25, the fifth communication device 2500 includes: a processor 2501, a network interface 2502, and a memory 2503. The network interface 2502 is, for example, a common public radio interface (common public radio interface, CPRI).

Specifically, the fifth communication device 2500 of the embodiments of the present invention further includes: instructions or programs stored on the memory 2503 and runnable on the processor 2501. The processor 2501 calls the instructions or programs in the memory 2503 to perform the method performed by the various modules shown in FIG. 18 and achieve the same technical effects, details of which are omitted here for brevity.

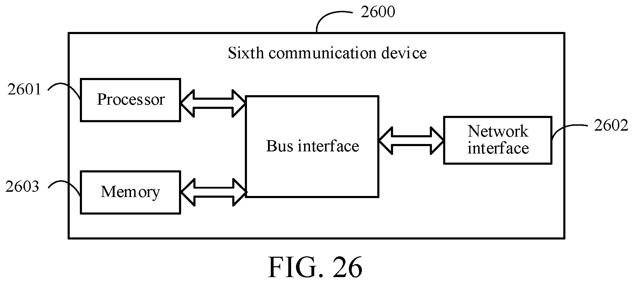

The embodiments of the present invention provide a sixth communication device. FIG. 26 is a schematic structural diagram of a sixth communication device according to an embodiment of the present invention. As shown in FIG. 26, the sixth communication device 2600 includes: a processor 2601, a network interface 2602, and a memory 2603. The network interface 2602 is, for example, a common public radio interface (common public radio interface, CPRI).

Specifically, the sixth communication device 2600 of the embodiments of the present invention further includes: instructions or programs stored on the memory 2603 and runnable on the processor 2601. The processor 2601 calls the instructions or programs in the memory 2603 to perform the method performed by the various modules shown in FIG. 19 and achieve the same technical effects, details of which are omitted here for brevity.

The embodiments of the present invention further provide a readable storage medium. The readable storage medium has programs or instructions stored thereon. The programs or instructions, when run or executed by a processor, implement all the processes of the foregoing information control method embodiment and can achieve the same technical effects, details of which are omitted here for brevity.

The processor is the processor in the terminal in the embodiments described above. The readable storage medium includes a computer-readable storage medium, for example, a computer read-only memory (ROM), a random access memory (RAM), a magnetic disc, a compact disc, or the like.

The embodiments of the present invention further provide a chip. The chip includes a processor and a communication interface. The communication interface is coupled to the processor. The processor is configured to run or execute programs or instructions to implement all the processes of the foregoing information control method embodiments and can achieve the same technical effects, details of which are omitted here for brevity.

It should be understood that the chip mentioned in the embodiments of the present invention can alternatively be referred to as a system chip, a chip system, or a system-on-chip.

The embodiments of the present invention further provide a computer program/program product. The computer program/program product is stored in a storage medium. The computer program/program product, when executed by at least one processor, implements all the processes of the foregoing information activation method embodiment and can achieve the same technical effects, details of which are omitted here for brevity.

The embodiments of the present invention further provide an information control system, including: a first communication device, a second communication device, a third communication device, a fourth communication device, a fifth communication device, and a sixth communication device. The first communication device may be configured to execute the steps of the information control method corresponding to the first communication device as described above; the second communication device may be configured to execute the steps of the information control method corresponding to the second communication device as described above; the third communication device may be configured to execute the steps of the information control method corresponding to the third communication device as described above; the fourth communication device may be configured to execute the steps of the information control method corresponding to the fourth communication device as described above; the fifth communication device may be configured to execute the steps of the information control method corresponding to the fifth communication device as described above; and the sixth communication device may be configured to execute the steps of the information control method corresponding to the sixth communication device as described above.

It should be noted, the terms "include", "comprise", or any other variations thereof here is intended to cover a non-exclusive inclusion, so that a processor, method, object, or apparatus including a series of elements not only includes those elements, but also includes other elements not specifically listed, or includes inherent elements of this process, method, object, or apparatus. Without more limitations, elements defined by the sentence "including one" does not exclude that there are still other same elements in the process, method, object, or apparatus including these elements. In addition, it should be noted that the scope of the methods and devices in the embodiments of the present invention is not limited to performing functions in the order shown or discussed, but may alternatively include performing functions in a substantially simultaneous manner or in an opposite order according to the functions involved. For example, the methods described may be executed in a different order than that described, and various steps may alternatively be added, omitted, or combined. In addition, features described with reference to some examples may alternatively be combined in other examples.

According to the descriptions in the foregoing implementations, a person skilled in the art may clearly learn that the method according to the foregoing embodiment may be implemented by relying on software and an essential commodity hardware platform or by using hardware, but the former is a better implementation in most cases. Based on such an understanding, the technical solutions of the present invention essentially, or the part contributing to the prior art, may be presented in the form of a computer software product. The computer software product is stored in a storage medium (e.g. a ROM/RAM, a magnetic disc, or a compact disc) including several instructions to enable a terminal (which may be a mobile phone, a computer, a server, an air conditioner, a network device, or the like) to perform the methods described in all the embodiments of the present invention.

The embodiments of the present invention have been described above with reference to the accompanying drawings. The present invention is not limited to the specific implementations described above, and the specific implementations described above are merely examples and not limitative. Those of ordinary skill in the art may make various forms under the teaching of the present invention without departing from the spirit of the present invention and the protection scope of the claims, and these forms shall all fall within the protection of the present invention.

## Claims

1. An information control method, applied to a first communication device and comprising:
executing, by the first communication device, a first operation, wherein the first operation comprises at least one of the following operations:
measuring a data transmission rate; and
sending first information;
wherein the first information comprises at least one of the following:
information used for indicating a data transmission rate;
a first event, comprising at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
first indication information, wherein the first indication information is used for indicating beginning or occurrence of the first event;
second indication information, wherein the second indication information is used for indicating completion of the first event;
third indication information, wherein the third indication information is used for indicating a failure of the first event; and
a first event duration; and
a second event, comprising at least one of the following: a data transmission recovery event, an event in which the data transmission rate is no longer zero, and an event in which connection between a terminal and a network is recovered.

2. The information control method according to claim 1, wherein the terminal transfer comprises at least one of the following items: terminal handover, terminal redirection, session recreation, and terminal re-registration;
and/or
the terminal transfer event comprises at least one of the following: a terminal transfer event in which IP continuity is maintained, and a terminal transfer event in which IP continuity is not maintained;
and/or
the event in which connection between a terminal and a network is cut off comprises at least one of the following events: the terminal actively asking to release the connection with the network, and a radio link failure between the terminal and the network.

3. The information control method according to claim 2, wherein the terminal transfer event in which IP continuity is maintained comprises at least one of the following: the terminal transfer event in which IP continuity is maintained comprises at least one of the following events: terminal handover in which the IP continuity of a terminal is maintained, terminal redirection in which the IP continuity of a terminal is maintained, session recreation in which the IP continuity of a terminal is maintained, and terminal re-registration in which the IP continuity of a terminal is maintained;
and/or
the terminal transfer event in which IP continuity is not maintained comprises at least one of the following: terminal handover in which the IP continuity is not maintained, terminal redirection in which the IP continuity is not maintained, session recreation in which the IP continuity is not maintained, and terminal re-registration in which the IP continuity is not maintained.

4. The information control method according to any one of claims 1 to 3, wherein
the data transmission interruption or rate decrease event comprises at least one of the following: a first transmission interruption or rate decrease event and a second transmission interruption or rate decrease event;
wherein
the first transmission interruption or rate decrease event comprises at least one of the following: data transmission interruption caused by a third event, temporary data transmission interruption, or a data transmission interruption or rate decrease event expected to be recovered;
the third event comprises at least one of the following: a terminal transfer event in which IP continuity is maintained, and a terminal transfer event;
the second transmission interruption or rate decrease event comprises at least one of the following: data transmission interruption or rate decrease caused by a fourth event, a data transmission interruption or rate decrease event with an unknown recovery possibility, a data transmission interruption or rate decrease event in which IP continuity is not maintained, and an abnormal data transmission interruption or rate decrease event; and
the fourth event comprises at least one of the following: an event in which an IP address of a terminal changes, a terminal transfer event in which an IP address of a terminal changes, an event in which connection between a terminal and a network is cut off, and an event of a radio link failure between a terminal and a network.

5. The information control method according to claim 4, wherein
for an IP-based terminal service, the third event comprises at least one of the following: a terminal transfer event, and a terminal transfer event in which IP continuity is maintained;
and/or
for an ethernet-based terminal service, the third event comprises at least one of the following: a terminal transfer event.

6. The information control method according to any one of claims 1 to 5, wherein the executing, by the first communication device, a first operation comprises:
obtaining, by the first communication device, first monitoring requirement information; and
executing, by the first communication device, the first operation according to the first monitoring requirement information;
the first monitoring requirement information comprises at least one of the following:
fourth indication information, used for indicating at least one of the following: in a case that the first event occurs, reporting the first event, the first indication information, and/or the first event duration; in a case that the first event ends, reporting the second indication information and/or the first event duration; in a case that the first event fails, reporting the third indication information; and in a case that the second event occurs, reporting the second event;
fifth indication information, used for indicating at least one of the following: reporting the first information through a control plane, or reporting the first information through a user plane;
sixth indication information, used for indicating: asking to measure a data transmission rate;
one or more rate value ranges;
one or more reporting conditions for triggering reporting of a data transmission rate;
a reporting event of a data transmission rate, wherein the reporting event comprises at least one of the following: the occurrence of the first event, the completion of the first event, the failure of the first event, and the occurrence of the second event; and
a reporting cycle of a data transmission rate.

7. The information control method according to claim 6, wherein the reporting conditions comprise at least one of the following: the rate is zero, the rate reaches any value range among N rate value ranges, and the rate is greater than or equal to M; and
wherein
N is a natural number greater than or equal to 1; and
M is a value of the rate.

8. The information control method according to claim 4, wherein
sending, by the first communication device, the first transmission interruption or rate decrease event, a first indication corresponding to the first transmission interruption event, and/or, a duration corresponding to the first transmission interruption event comprises: in a case that a first condition is satisfied, sending, by the first communication device, the first indication information corresponding to the first transmission interruption event, and/or, the duration corresponding to the first transmission interruption event; and
wherein the first condition comprises at least one of the following: the third event occurs, and the data transmission interruption or rate decrease caused by the third event occurs.

9. The information control method according to claim 4, wherein
sending, by the first communication device, the second transmission interruption or rate decrease event, a first indication corresponding to the second transmission interruption event, and/or, a duration corresponding to the second transmission interruption event comprises: in a case that a second condition is satisfied, sending, by the first communication device, the second transmission interruption or rate decrease event, the first indication corresponding to the second transmission interruption event, and/or, the duration corresponding to the second transmission interruption event; and
wherein the second condition comprises at least one of the following: the fourth event occurs, and the data transmission interruption or rate decrease caused by the fourth event occurs.

10. The information control method according to any one of claims 1 to 9, wherein the information used for indicating a data transmission rate comprises at least one of the following:
in a case that a third condition is satisfied, the first communication device sends the information used for indicating a data transmission rate;
the third condition comprises at least one of the following:
the measured data transmission rate is determined to satisfy a reporting condition;
the first event occurs;
the first event is completed;
the first event fails; and
the second event occurs.

11. The information control method according to any one of claims 1 to 10, wherein the sending first information comprises at least one of the following:
sending, by the first communication device, an uplink data packet, wherein a packet header of the uplink data packet contains the first information; and
sending, by the first communication device, a control plane message, wherein the control plane message contains the first information.

12. The information control method according to claim 11, wherein the packet header of the uplink data packet comprises at least one of the following: a GTP packet header and a service application layer packet header.

13. An information control method, applied to a second communication device and comprising:
executing, by the second communication device, a second operation, wherein the second operation comprises at least one of the following operations:
obtaining first information;
determining second information; and
sending the second information;
wherein
the first information comprises at least one of the following:
information used for indicating a data transmission rate;
a first event, comprising at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
first indication information, wherein the first indication information is used for indicating beginning or occurrence of the first event;
second indication information, wherein the second indication information is used for indicating completion of the first event;
third indication information, wherein the third indication information is used for indicating a failure of the first event;
a first event duration; and
a second event, comprising at least one of the following: a data transmission recovery event, an event in which the data transmission rate is no longer zero, and an event in which connection between a terminal and a network is recovered;
wherein the data transmission rate in the first information is a data transmission rate measured by a first communication device;
the second information comprises at least one of the following:
information used for indicating a data transmission rate;
a fifth event, comprising at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
seventh indication information, wherein the seventh indication information is used for indicating beginning or occurrence of the fifth event;
eighth indication information, wherein the eighth indication information is used for indicating completion of the fifth event;
ninth indication information, wherein the ninth indication information is used for indicating a failure of the fifth event; and
a fifth event duration; and
a sixth event, comprising at least one of the following: a data transmission recovery event, an event in which the data transmission rate is no longer zero, and an event in which connection between a terminal and a network is recovered.

14. The information control method according to claim 13, wherein content of the second information comprises at least one of the following:
information self-determined by the second communication device;
information in the first information; and
information determined by the second communication device according to the first information;
the data transmission rate in the second information is a data transmission rate measured by the second communication device or the data transmission rate contained in the first information;
the events in the fifth event comprise at least one of the following: a first event, a fifth event determined according to the first event, and a self-determined fifth event;
the events in the sixth event comprise at least one of the following: a second event, a sixth event determined according to the second event, and a self-determined sixth event; and
the fifth event duration is a fifth event duration determined by the second communication device or the first event duration contained in the first information.

15. The information control method according to claim 14, wherein the second information determined by the second communication device according to the first information comprises at least one of the following: an operation for determining the fifth event according to the first event, comprising at least one of the following:
in a case that the first information comprises the terminal transfer event, and the second communication device determines that the IP address is maintained unchanged, the fifth event determined by the second communication device comprises: the terminal transfer event in which IP continuity is maintained;
in a case that the first information comprises the terminal transfer event, and the second communication device determines that the IP address is maintained unchanged and the data transmission rate is zero or decreases, the fifth event determined by the second communication device comprises: the data transmission interruption or rate decrease event in which IP continuity is maintained;
in a case that the first information comprises the data transmission interruption or rate decrease event, and the second communication device determines that the IP address is maintained unchanged, the fifth event determined by the second communication device comprises: the data transmission interruption or rate decrease event in which IP continuity is maintained; and
in a case that the first information comprises the data transmission interruption or rate decrease event caused by terminal transfer, and the second communication device determines that the IP address is maintained unchanged, the fifth event determined by the second communication device comprises: the data transmission interruption or rate decrease event, caused by terminal transfer, in which IP continuity is maintained.

16. The information control method according to any one of claims 13 to 15, wherein the executing, by the second communication device, a second operation comprises:
obtaining, by the second communication device, second monitoring requirement information; and
executing, by the second communication device, the second operation according to the second monitoring requirement information;
wherein
the second monitoring requirement information comprises at least one of the following:
tenth indication information, used for indicating: asking to measure a data transmission rate;
one or more rate value ranges;
one or more reporting conditions for triggering reporting of a data transmission rate;
a reporting event of a data transmission rate, wherein the reporting event comprises at least one of the following: the occurrence of the first event, the completion of the first event, the failure of the first event, and the occurrence of the second event;
a reporting cycle of a data transmission rate;
eleventh indication information, used for indicating: asking to execute at least one of the following third operations: obtaining the first information, and monitoring the first information sent by a first target terminal; and
a time period of executing the third operation.

17. The information control method according to claim 16, wherein the reporting conditions comprise at least one of the following: the rate is zero, the rate reaches any value range among N rate value ranges, and the rate is greater than or equal to M; and
wherein
N is a natural number greater than or equal to 1; and
M is a value of the rate.

18. The information control method according to any one of claims 13 to 15, wherein the obtaining, by the second communication device, first information comprises at least one of the following:
receiving, by the second communication device, an uplink data packet, wherein a packet header of the uplink data packet contains the first information; and
receiving, by the second communication device, a control plane message, wherein the control plane message contains the first information.

19. The information control method according to claim 18, wherein the packet header of the uplink data packet comprises at least one of the following: a GTP packet header and a service application layer packet header.

20. An information control method, applied to a third communication device and comprising:
executing, by the third communication device, a fourth operation, wherein the fourth operation comprises at least one of the following operations:
sending a first subscription request; and
sending a second subscription request;
wherein the first subscription request comprises at least one of the following:
information of a terminal;
a data transmission rate of a data flow;
one or more rate value ranges;
one or more reporting conditions for triggering reporting of a data transmission rate;
a reporting event of a data transmission rate, wherein the reporting event comprises at least one of the following: occurrence of a first subscription event, completion of the first subscription event, a failure of the first subscription event, and occurrence of a second subscription event;
a reporting cycle of a data transmission rate;
a first subscription event;
a second subscription event; and
twelfth indication information, used for indicating at least one of the following: in a case that a first event occurs, reporting the first event, the occurrence of the first event, and/or a first event duration; in a case that the first event ends, reporting the end of the first event and/or the first event duration; in a case that the first event fails, reporting a first event failure indication; and in a case that a second event occurs, reporting the second event;
wherein the first subscription event comprises at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
the second subscription event comprises at least one of the following: a data transmission recovery event, an event in which the data transmission rate is no longer zero, and an event in which connection between a terminal and a network is recovered;
wherein the second subscription request comprises at least one of the following: the information of the terminal, description information of the data flow, related subscription information of a predicted data transmission rate, and related subscription information of a predicted event;
the related subscription information of the predicted data transmission rate comprises at least one of the following: a first target time point, a first target time period, a first target region range, a first target location, and information used for indicating: asking to predict a data transmission rate;
the related subscription information of the predicted event comprises at least one of the following: a second target time period, a second target region range, and an event asked to be predicted; and
the event asked to be predicted comprises at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained.

21. The information control method according to claim 20, wherein the reporting conditions comprise at least one of the following: the rate is zero, the rate reaches any value range among N rate value ranges, and the rate is greater than or equal to M; and
wherein
N is a natural number greater than or equal to 1; and
M is a value of the rate.

22. The information control method according to claim 20 or 21, wherein
the data transmission rate of the data flow is one of the following: a measured data transmission rate, related information of a predicted data transmission rate, and related information of an event predicted to occur.

23. The information control method according to any one of claims 20 to 22, wherein
the data transmission interruption or rate decrease event comprises at least one of the following: a first transmission interruption or rate decrease event and a second transmission interruption or rate decrease event;
wherein
the first transmission interruption or rate decrease event comprises at least one of the following: data transmission interruption caused by a third event, temporary data transmission interruption, or a data transmission interruption or rate decrease event expected to be recovered;
the third event comprises at least one of the following: a terminal transfer event in which IP continuity is maintained, and a terminal transfer event;
the second transmission interruption or rate decrease event comprises at least one of the following: data transmission interruption or rate decrease caused by a fourth event, a data transmission interruption or rate decrease event with an unknown recovery possibility, a data transmission interruption or rate decrease event in which IP continuity is not maintained, and an abnormal data transmission interruption or rate decrease event; and
the fourth event comprises at least one of the following: an event in which an IP address of a terminal changes, a terminal transfer event in which an IP address of a terminal changes, an event in which connection between a terminal and a network is cut off, and an event of a radio link failure between a terminal and a network.

24. The information control method according to claim 23, wherein
for an IP-based terminal service, the third event comprises at least one of the following: a terminal transfer event, and a terminal transfer event in which IP continuity is maintained;
and/or
for an ethernet-based terminal service, the third event comprises at least one of the following: a terminal transfer event.

25. The information control method according to any one of claims 20 to 24, wherein after the step of sending, by the third communication device, a first subscription request, the fourth operation further comprises at least one of the following: obtaining first information and/or second information, and obtaining the related information of the event predicted to occur.

26. The information control method according to claim 25, wherein the obtaining, by the third communication device, first information and/or second information comprises:
receiving, by the third communication device, an uplink data packet, wherein a packet header of the uplink data packet contains the first information and/or the second information; and
receiving, by the third communication device, a control plane message, wherein the control plane message contains the first information and/or the second information.

27. An information control method, applied to a fourth communication device and comprising:
obtaining, by the fourth communication device, a second subscription request, wherein the second subscription request comprises at least one of the following: information of a terminal, description information of a data flow, related subscription information of a predicted data transmission rate, and related subscription information of a predicted event;
the related subscription information of the predicted data transmission rate comprises at least one of the following: a first target time point, a first target time period, a first target region range, a first target location, and information used for indicating: asking to predict a data transmission rate;
the related subscription information of the predicted event comprises at least one of the following: a second target time period, a second target region range, and an event asked to be predicted; and
executing, by the fourth communication device, a fifth operation according to a first subscription request, wherein the fifth operation comprises at least one of the following operations:
executing prediction of a data transmission rate;
executing prediction of whether the event asked to be predicted occurs or does not occur;
sending related information of one or more predicted data transmission rates; and
sending related information of one or more events predicted to occur;
the related information of the predicted data transmission rate comprises at least one of the following:
first time;
a first territory; and
information used for indicating the predicted data transmission rate;
wherein the related information of the event predicted to occur comprises at least one of the following:
second time;
a second address; and
the event predicted to occur.

28. The information control method according to claim 27, wherein the predicted data transmission rate comprises at least one of the following:
a predicted data transmission rate at the first time and/or the first territory;
a predicted data transmission rate of the data flow; and
a predicted data transmission rate of the terminal.

29. The information control method according to claim 27 or 28, wherein the predicted data transmission rate at the first time and/or the first territory comprises:
a predicted data transmission rate of the data flow of the terminal at the first time and/or the first territory.

30. The information control method according to any one of claims 27 to 29, wherein the event predicted to occur comprises at least one of the following:
a predicted event occurring at the first time and/or the first territory;
a predicted event occurring at the data flow; and
a predicted event occurring at the terminal.

31. The information control method according to claim 30, wherein the predicted event occurring at the first time and/or the first territory comprises:
a predicted event occurring at the data flow of the terminal at the first time and/or the first territory.

32. An information control method, applied to a fifth communication device and comprising:
executing, by the fifth communication device, a sixth operation, wherein the sixth operation comprises at least one of the following operations:
generating a first monitoring policy; and
sending the first monitoring policy;
wherein
the first monitoring policy comprises at least one of the following:
thirteenth indication information, used for indicating at least one of the following: in a case that a first event occurs, reporting the first event, first indication information, and/or a first event duration; in a case that the first event ends, reporting second indication information and/or the first event duration; in a case that the first event fails, reporting third indication information; and in a case that a second event occurs, reporting the second event;
fourteenth indication information, used for indicating at least one of the following: reporting first information through a control plane, or reporting the first information through a user plane;
fifteenth indication information, used for indicating: asking to measure a data transmission rate;
one or more rate value ranges;
one or more reporting conditions for triggering reporting of a data transmission rate;
a reporting event of a data transmission rate, wherein the reporting event comprises at least one of the following: the occurrence of the first event, the completion of the first event, the failure of the first event, and the occurrence of the second event; and
a reporting cycle of a data transmission rate.

33. The information control method according to claim 32, wherein the reporting conditions comprise at least one of the following: the rate is zero, the rate reaches any value range among N rate value ranges, and the rate is greater than or equal to M; and
wherein
N is a natural number greater than or equal to 1; and
M is a value of the rate.

34. The information control method according to claim 32 or 33, wherein the executing, by the fifth communication device, a sixth operation comprises:
obtaining a first subscription request; and
executing, by the fifth communication device, the sixth operation according to the first subscription request.

35. The information control method according to any one of claims 32 to 34, wherein after the step of sending the first monitoring policy, the sixth operation further comprises at least one of the following:
obtaining first information, second information, and/or related information of an event predicted to occur; and
sending the first information, the second information, and/or the related information of the event predicted to occur.

36. An information control method, applied to a sixth communication device and comprising:
executing, by the sixth communication device, a seventh operation, wherein the seventh operation comprises at least one of the following operations:
generating first monitoring requirement information, and/or second monitoring requirement information;
sending the first monitoring requirement information, and/or sending the second monitoring requirement information;
monitoring a seventh event; and
sending the seventh event;
wherein
the seventh event comprises at least one of the following: a terminal handover event, a data transmission interruption or rate decrease event, an event in which an IP address of a terminal changes, a terminal handover event in which IP continuity is maintained, a data transmission interruption or rate decrease event in which IP continuity is maintained, a data transmission interruption or rate decrease event caused by terminal handover, and a data transmission interruption or rate decrease event, caused by terminal handover, in which IP continuity is maintained;
wherein
the first monitoring requirement information comprises at least one of the following:
fourth indication information, used for indicating at least one of the following: in a case that a first event occurs, reporting the first event, first indication information, and/or a first event duration; in a case that the first event ends, reporting second indication information and/or the first event duration; in a case that the first event fails, reporting third indication information; and in a case that a second event occurs, reporting the second event;
fifth indication information, used for indicating at least one of the following: reporting the first information through a control plane, or reporting the first information through a user plane;
sixth indication information, used for indicating: asking to measure a data transmission rate;
one or more rate value ranges;
one or more reporting conditions for triggering reporting of a data transmission rate;
a reporting event of a data transmission rate, wherein the reporting event comprises at least one of the following: the occurrence of the first event, the completion of the first event, the failure of the first event, and the occurrence of the second event; and
a reporting cycle of a data transmission rate;
wherein
the second monitoring requirement information comprises at least one of the following:
tenth indication information, used for indicating: asking to measure a data transmission rate;
one or more reporting triggering conditions for a data transmission rate;
a reporting event of a data transmission rate, wherein the reporting event comprises at least one of the following: the occurrence of the first event, the completion of the first event, the failure of the first event, and the occurrence of the second event;
a reporting cycle of a data transmission rate;
an eleventh indication, used for indicating: asking to execute at least one of the following third operations: obtaining the first information, and monitoring the first information sent by a first target terminal; and
a time period of executing the third operation.

37. The information control method according to claim 36, wherein the reporting conditions comprise at least one of the following: the rate is zero, the rate reaches any value range among N rate value ranges, and the rate is greater than or equal to M; and
wherein
N is a natural number greater than or equal to 1; and
M is a value of the rate.

38. The information control method according to claim 36 or 37, wherein the executing, by the sixth communication device, a seventh operation comprises:
obtaining a first monitoring policy; and
executing, by the sixth communication device, the seventh operation according to the first monitoring policy.

39. The information control method according to any one of claims 36 to 38, wherein after the step of sending the first monitoring requirement information, and/or sending the second monitoring requirement information, the seventh operation further comprises at least one of the following:
obtaining first information, second information, and/or related information of an event predicted to occur; and
sending the first information, the second information, and/or the related information of the event predicted to occur.

40. An information control apparatus, applied to a first communication device and comprising:
a first execution module, configured to execute a first operation, wherein the first operation comprises at least one of the following operations:
measuring a data transmission rate; and
sending first information,
wherein the first information comprises at least one of the following:
information used for indicating a data transmission rate;
a first event, comprising at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
first indication information, wherein the first indication information is used for indicating beginning or occurrence of the first event;
second indication information, wherein the second indication information is used for indicating completion of the first event;
third indication information, wherein the third indication information is used for indicating a failure of the first event;
a first event duration; and
a second event, comprising at least one of the following: a data transmission recovery event, an event in which the data transmission rate is no longer zero, and an event in which connection between a terminal and a network is recovered.

41. The information control apparatus according to claim 40, wherein the terminal transfer comprises at least one of the following items: terminal handover, terminal redirection, session recreation, and terminal re-registration;
and/or
the terminal transfer event comprises at least one of the following: a terminal transfer event in which IP continuity is maintained, and a terminal transfer event in which IP continuity is not maintained;
and/or
the event in which connection between a terminal and a network is cut off comprises at least one of the following events: the terminal actively asking to release the connection with the network, and a radio link failure between the terminal and the network.

42. The information control apparatus according to claim 41, wherein the terminal transfer event in which IP continuity is maintained comprises at least one of the following: the terminal transfer event in which IP continuity is maintained comprises at least one of the following events: terminal handover in which the IP continuity of a terminal is maintained, terminal redirection in which the IP continuity of a terminal is maintained, session recreation in which the IP continuity of a terminal is maintained, and terminal re-registration in which the IP continuity of a terminal is maintained;
and/or
the terminal transfer event in which IP continuity is not maintained comprises at least one of the following: terminal handover in which the IP continuity is not maintained, terminal redirection in which the IP continuity is not maintained, session recreation in which the IP continuity is not maintained, and terminal re-registration in which the IP continuity is not maintained.

43. The information control apparatus according to any one of claims 40 to 42, wherein
the data transmission interruption or rate decrease event comprises at least one of the following: a first transmission interruption or rate decrease event and a second transmission interruption or rate decrease event;
wherein
the first transmission interruption or rate decrease event comprises at least one of the following: data transmission interruption caused by a third event, temporary data transmission interruption, or a data transmission interruption or rate decrease event expected to be recovered;
the third event comprises at least one of the following: a terminal transfer event in which IP continuity is maintained, and a terminal transfer event;
the second transmission interruption or rate decrease event comprises at least one of the following: data transmission interruption or rate decrease caused by a fourth event, a data transmission interruption or rate decrease event with an unknown recovery possibility, a data transmission interruption or rate decrease event in which IP continuity is not maintained, and an abnormal data transmission interruption or rate decrease event; and
the fourth event comprises at least one of the following: an event in which an IP address of a terminal changes, a terminal transfer event in which an IP address of a terminal changes, an event in which connection between a terminal and a network is cut off, and an event of a radio link failure between a terminal and a network.

44. The information control apparatus according to claim 43, wherein
for an IP-based terminal service, the third event comprises at least one of the following: a terminal transfer event, and a terminal transfer event in which IP continuity is maintained;
and/or
for an ethernet-based terminal service, the third event comprises at least one of the following: a terminal transfer event.

45. The information control apparatus according to any one of claims 40 to 44, wherein the executing a first operation comprises:
obtaining first monitoring requirement information; and
executing the first operation according to the first monitoring requirement information;
the first monitoring requirement information comprises at least one of the following:
fourth indication information, used for indicating at least one of the following: in a case that the first event occurs, reporting the first event, the first indication information, and/or the first event duration; in a case that the first event ends, reporting the second indication information and/or the first event duration; in a case that the first event fails, reporting the third indication information; and in a case that the second event occurs, reporting the second event;
fifth indication information, used for indicating at least one of the following: reporting the first information through a control plane, or reporting the first information through a user plane;
sixth indication information, used for indicating: asking to measure a data transmission rate;
one or more rate value ranges;
one or more reporting conditions for triggering reporting of a data transmission rate;
a reporting event of a data transmission rate, wherein the reporting event comprises at least one of the following: the occurrence of the first event, the completion of the first event, the failure of the first event, and the occurrence of the second event; and
a reporting cycle of a data transmission rate.

46. The information control apparatus according to claim 45, wherein the reporting conditions comprise at least one of the following: the rate is zero, the rate reaches any value range among N rate value ranges, and the rate is greater than or equal to M; and
wherein
N is a natural number greater than or equal to 1; and
M is a value of the rate.

47. The information control apparatus according to claim 43, wherein
sending the first transmission interruption or rate decrease event, a first indication corresponding to the first transmission interruption event, and/or, a duration corresponding to the first transmission interruption event comprises: in a case that a first condition is satisfied, sending, by the first communication device, the first indication information corresponding to the first transmission interruption event, and/or, the duration corresponding to the first transmission interruption event; and
wherein the first condition comprises at least one of the following: the third event occurs, and the data transmission interruption or rate decrease caused by the third event occurs.

48. The information control apparatus according to claim 43, wherein
sending the second transmission interruption or rate decrease event, a first indication corresponding to the second transmission interruption event, and/or, a duration corresponding to the second transmission interruption event comprises: in a case that a second condition is satisfied, sending, by the first communication device, the second transmission interruption or rate decrease event, the first indication corresponding to the second transmission interruption event, and/or, the duration corresponding to the second transmission interruption event; and
wherein the second condition comprises at least one of the following: the fourth event occurs, and the data transmission interruption or rate decrease caused by the fourth event occurs.

49. The information control apparatus according to any one of claims 40 to 48, wherein the information used for indicating a data transmission rate comprises at least one of the following:
in a case that a third condition is satisfied, the first communication device sends the information used for indicating a data transmission rate;
the third condition comprises at least one of the following:
the measured data transmission rate is determined to satisfy a reporting condition;
the first event occurs;
the first event is completed;
the first event fails; and
the second event occurs.

50. The information control apparatus according to any one of claims 40 to 49, wherein the sending first information comprises at least one of the following:
sending, by the first communication device, an uplink data packet, wherein a packet header of the uplink data packet contains the first information; and
sending, by the first communication device, a control plane message, wherein the control plane message contains the first information.

51. The information control apparatus according to claim 50, wherein the packet header of the uplink data packet comprises at least one of the following: a GTP packet header and a service application layer packet header.

52. An information control apparatus, applied to a second communication device and comprising:
a second execution module, configured to execute a second operation, wherein the second operation comprises at least one of the following operations:
obtaining first information;
determining second information; and
sending the second information;
wherein
the first information comprises at least one of the following:
information used for indicating a data transmission rate;
a first event, comprising at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
first indication information, wherein the first indication information is used for indicating beginning or occurrence of the first event;
second indication information, wherein the second indication information is used for indicating completion of the first event;
third indication information, wherein the third indication information is used for indicating a failure of the first event;
a first event duration; and
a second event, comprising at least one of the following: a data transmission recovery event, an event in which the data transmission rate is no longer zero, and an event in which connection between a terminal and a network is recovered;
wherein the data transmission rate in the first information is a data transmission rate measured by a first communication device;
the second information comprises at least one of the following:
information used for indicating a data transmission rate;
a fifth event, comprising at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
seventh indication information, wherein the seventh indication information is used for indicating beginning or occurrence of the fifth event;
eighth indication information, wherein the eighth indication information is used for indicating completion of the fifth event;
ninth indication information, wherein the ninth indication information is used for indicating a failure of the fifth event; and
a fifth event duration; and
a sixth event, comprising at least one of the following: a data transmission recovery event, an event in which the data transmission rate is no longer zero, and an event in which connection between a terminal and a network is recovered.

53. The information control apparatus according to claim 52, wherein content of the second information comprises at least one of the following:
information self-determined by the second communication device;
information in the first information; and
information determined by the second communication device according to the first information;
the data transmission rate in the second information is a data transmission rate measured by the second communication device or the data transmission rate contained in the first information;
the events in the fifth event comprise at least one of the following: a first event, a fifth event determined according to the first event, and a self-determined fifth event;
the events in the sixth event comprise at least one of the following: a second event, a sixth event determined according to the second event, and a self-determined sixth event; and
the fifth event duration is a fifth event duration determined by the second communication device or the first event duration contained in the first information.

54. The information control apparatus according to claim 53, wherein the second information determined by the second communication device according to the first information comprises at least one of the following: an operation for determining the fifth event according to the first event, comprising at least one of the following:
in a case that the first information comprises the terminal transfer event, and the second communication device determines that the IP address is maintained unchanged, the fifth event determined by the second communication device comprises: the terminal transfer event in which IP continuity is maintained;
in a case that the first information comprises the terminal transfer event, and the second communication device determines that the IP address is maintained unchanged and the data transmission rate is zero or decreases, the fifth event determined by the second communication device comprises: the data transmission interruption or rate decrease event in which IP continuity is maintained; and
in a case that the first information comprises the data transmission interruption or rate decrease event, and the second communication device determines that the IP address is maintained unchanged, the fifth event determined by the second communication device comprises: the data transmission interruption or rate decrease event in which IP continuity is maintained; and
in a case that the first information comprises the data transmission interruption or rate decrease event caused by terminal transfer, and the second communication device determines that the IP address is maintained unchanged, the fifth event determined by the second communication device comprises: the data transmission interruption or rate decrease event, caused by terminal transfer, in which IP continuity is maintained.

55. The information control apparatus according to any one of claims 52 to 54, wherein the executing a second operation comprises:
obtaining second monitoring requirement information; and
executing the second operation according to the second monitoring requirement information;
wherein
the second monitoring requirement information comprises at least one of the following:
tenth indication information, used for indicating: asking to measure a data transmission rate;
one or more rate value ranges;
one or more reporting conditions for triggering reporting of a data transmission rate;
a reporting event of a data transmission rate, wherein the reporting event comprises at least one of the following: the occurrence of the first event, the completion of the first event, the failure of the first event, and the occurrence of the second event;
a reporting cycle of a data transmission rate;
eleventh indication information, used for indicating: asking to execute at least one of the following third operations: obtaining the first information, and monitoring the first information sent by a first target terminal; and
a time period of executing the third operation.

56. The information control apparatus according to claim 55, wherein the reporting conditions comprise at least one of the following: the rate is zero, the rate reaches any value range among N rate value ranges, and the rate is greater than or equal to M;
wherein
N is a natural number greater than or equal to 1; and
M is a value of the rate.

57. The information control apparatus according to any one of claims 52 to 56, wherein the obtaining first information comprises at least one of the following:
receiving, by the second communication device, an uplink data packet, wherein a packet header of the uplink data packet contains the first information; and
receiving, by the second communication device, a control plane message, wherein the control plane message contains the first information.

58. The information control apparatus according to claim 57, wherein the packet header of the uplink data packet comprises at least one of the following: a GTP packet header and a service application layer packet header.

59. An information control apparatus, applied to a third communication device and comprising:
a third execution module, configured to execute a fourth operation, wherein the fourth operation comprises at least one of the following operations:
sending a first subscription request; and
sending a second subscription request;
wherein the first subscription request comprises at least one of the following:
information of a terminal;
a data transmission rate of a data flow;
one or more rate value ranges;
one or more reporting conditions for triggering reporting of a data transmission rate;
a reporting event of a data transmission rate, wherein the reporting event comprises at least one of the following: occurrence of a first subscription event, completion of the first subscription event, a failure of the first subscription event, and occurrence of a second subscription event;
a reporting cycle of a data transmission rate;
a first subscription event;
a second subscription event; and
twelfth indication information, used for indicating at least one of the following: in a case that a first event occurs, reporting the first event, the occurrence of the first event, and/or a first event duration; in a case that the first event ends, reporting the end of the first event and/or the first event duration; in a case that the first event fails, reporting a first event failure indication; and in a case that the second event occurs, reporting the second event;
wherein the first subscription event comprises at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained;
the second subscription event comprises at least one of the following: a data transmission recovery event, an event in which the data transmission rate is no longer zero, and an event in which connection between a terminal and a network is recovered;
wherein the second subscription request comprises at least one of the following: the information of the terminal, description information of the data flow, related subscription information of a predicted data transmission rate, and related subscription information of a predicted event;
the related subscription information of the predicted data transmission rate comprises at least one of the following: a first target time point, a first target time period, a first target region range, a first target location, and information used for indicating: asking to predict a data transmission rate;
the related subscription information of the predicted event comprises at least one of the following: a second target time period, a second target region range, and an event asked to be predicted; and
the event asked to be predicted comprises at least one of the following: a terminal transfer event, a data transmission interruption or rate decrease event, an event in which an IP address of a terminal changes, an event in which connection between a terminal and a network is cut off, a terminal transfer event in which IP continuity is maintained, a data transmission interruption or rate decrease event in which IP continuity is maintained, a data transmission interruption or rate decrease event caused by terminal transfer, and a data transmission interruption or rate decrease event, caused by terminal transfer, in which IP continuity is maintained.

60. The information control apparatus according to claim 59, wherein the reporting conditions comprise at least one of the following: the rate is zero, the rate reaches any value range among N rate value ranges, and the rate is greater than or equal to M; and
wherein
N is a natural number greater than or equal to 1; and
M is a value of the rate.

61. The information control apparatus according to claim 59 or 60, wherein
the data transmission rate of the data flow is one of the following: a measured data transmission rate, related information of a predicted data transmission rate, and related information of an event predicted to occur.

62. The information control apparatus according to any one of claims 59 to 61, wherein
the data transmission interruption or rate decrease event comprises at least one of the following: a first transmission interruption or rate decrease event and a second transmission interruption or rate decrease event;
wherein
the first transmission interruption or rate decrease event comprises at least one of the following: data transmission interruption caused by a third event, temporary data transmission interruption, or a data transmission interruption or rate decrease event expected to be recovered;
the third event comprises at least one of the following: a terminal transfer event in which IP continuity is maintained, and a terminal transfer event;
the second transmission interruption or rate decrease event comprises at least one of the following: data transmission interruption or rate decrease caused by a fourth event, a data transmission interruption or rate decrease event with an unknown recovery possibility, a data transmission interruption or rate decrease event in which IP continuity is not maintained, and an abnormal data transmission interruption or rate decrease event; and
the fourth event comprises at least one of the following: an event in which an IP address of a terminal changes, a terminal transfer event in which an IP address of a terminal changes, an event in which connection between a terminal and a network is cut off, and an event of a radio link failure between a terminal and a network.

63. The information control apparatus according to claim 62, wherein
for an IP-based terminal service, the third event comprises at least one of the following: a terminal transfer event, and a terminal transfer event in which IP continuity is maintained;
and/or
for an ethernet-based terminal service, the third event comprises at least one of the following: a terminal transfer event.

64. The information control apparatus according to any one of claims 59 to 63, wherein after the step of sending a first subscription request, the fourth operation further comprises at least one of the following: obtaining first information and/or second information, and obtaining the related information of the event predicted to occur.

65. The information control apparatus according to claim 64, wherein the obtaining first information and/or second information comprises:
receiving an uplink data packet, wherein a packet header of the uplink data packet contains the first information and/or the second information; and
receiving a control plane message, wherein the control plane message contains the first information and/or the second information.

66. An information control apparatus, applied to a fourth communication device and comprising:
an obtaining module, configured to obtain a second subscription request, wherein the second subscription request comprises at least one of the following: information of a terminal, description information of a data flow, related subscription information of a predicted data transmission rate, and related subscription information of a predicted event;
the related subscription information of the predicted data transmission rate comprises at least one of the following: a first target time point, a first target time period, a first target region range, a first target location, and information used for indicating: asking to predict a data transmission rate;
the related subscription information of the predicted event comprises at least one of the following: a second target time period, a second target region range, and an event asked to be predicted; and
a fourth execution module, configured to execute a fifth operation according to a first subscription request, wherein the fifth operation comprises at least one of the following operations:
executing prediction of a data transmission rate;
executing prediction of whether the event asked to be predicted occurs or does not occur;
sending related information of one or more predicted data transmission rates; and
sending related information of one or more events predicted to occur;
the related information of the predicted data transmission rate comprises at least one of the following:
first time;
a first territory; and
information used for indicating the predicted data transmission rate;
wherein the related information of the event predicted to occur comprises at least one of the following:
second time;
a second address; and
the event predicted to occur.

67. The information control apparatus according to claim 66, wherein the predicted data transmission rate comprises at least one of the following:
a predicted data transmission rate at the first time and/or the first territory;
a predicted data transmission rate of the data flow; and
a predicted data transmission rate of the terminal.

68. The information control apparatus according to claim 66 or 67, wherein the predicted data transmission rate at the first time and/or the first territory comprises:
a predicted data transmission rate of the data flow of the terminal at the first time and/or the first territory.

69. The information control apparatus according to any one of claims 66 to 68, wherein the event predicted to occur comprises at least one of the following:
a predicted event occurring at the first time and/or the first territory;
a predicted event occurring at the data flow; and
a predicted event occurring at the terminal.

70. The information control apparatus according to claim 69, wherein the predicted event occurring at the first time and/or the first territory comprises:
a predicted event occurring at the data flow of the terminal at the first time and/or the first territory.

71. An information control apparatus, applied to a fifth communication device and comprising:
a fifth execution module, configured to execute a sixth operation, wherein the sixth operation comprises at least one of the following operations:
generating a first monitoring policy; and
sending the first monitoring policy;
wherein
the first monitoring policy comprises at least one of the following:
thirteenth indication information, used for indicating at least one of the following: in a case that a first event occurs, reporting the first event, first indication information, and/or a first event duration; in a case that the first event ends, reporting second indication information and/or the first event duration; in a case that the first event fails, reporting third indication information; and in a case that a second event occurs, reporting the second event;
fourteenth indication information, used for indicating at least one of the following: reporting first information through a control plane, or reporting the first information through a user plane;
fifteenth indication information, used for indicating: asking to measure a data transmission rate;
one or more rate value ranges;
one or more reporting conditions for triggering reporting of a data transmission rate;
a reporting event of a data transmission rate, wherein the reporting event comprises at least one of the following: the occurrence of the first event, the completion of the first event, the failure of the first event, and the occurrence of the second event; and
a reporting cycle of a data transmission rate.

72. The information control apparatus according to claim 71, wherein the reporting conditions comprise at least one of the following: the rate is zero, the rate reaches any value range among N rate value ranges, and the rate is greater than or equal to M; and
wherein
N is a natural number greater than or equal to 1; and
M is a value of the rate.

73. The information control apparatus according to claim 71 or 72, wherein the executing a sixth operation comprises:
obtaining a first subscription request; and
executing the sixth operation according to the first subscription request.

74. The information control apparatus according to any one of claims 71 to 73, wherein after the step of sending the first monitoring policy, the sixth operation further comprises at least one of the following:
obtaining the first information, second information, and/or related information of an event predicted to occur; and
sending the first information, the second information, and/or the related information of the event predicted to occur.

75. An information control apparatus, applied to a sixth communication device and comprising:
a sixth execution module, configured to execute a seventh operation, wherein the seventh operation comprises at least one of the following operations:
generating first monitoring requirement information, and/or second monitoring requirement information;
sending the first monitoring requirement information, and/or sending the second monitoring requirement information;
monitoring a seventh event; and
sending the seventh event;
wherein
the seventh event comprises at least one of the following: a terminal handover event, a data transmission interruption or rate decrease event, an event in which an IP address of a terminal changes, a terminal handover event in which IP continuity is maintained, a data transmission interruption or rate decrease event in which IP continuity is maintained, a data transmission interruption or rate decrease event caused by terminal handover, and a data transmission interruption or rate decrease event, caused by terminal handover, in which IP continuity is maintained;
wherein
the first monitoring requirement information comprises at least one of the following:
fourth indication information, used for indicating at least one of the following: in a case that a first event occurs, reporting the first event, first indication information, and/or a first event duration; in a case that the first event ends, reporting second indication information and/or the first event duration; in a case that the first event fails, reporting third indication information; and in a case that a second event occurs, reporting the second event;
fifth indication information, used for indicating at least one of the following: reporting the first information through a control plane, or reporting the first information through a user plane;
sixth indication information, used for indicating: asking to measure a data transmission rate;
one or more rate value ranges;
one or more reporting conditions for triggering reporting of a data transmission rate;
a reporting event of a data transmission rate, wherein the reporting event comprises at least one of the following: the occurrence of the first event, the completion of the first event, the failure of the first event, and the occurrence of the second event; and
a reporting cycle of a data transmission rate;
wherein
the second monitoring requirement information comprises at least one of the following:
tenth indication information, used for indicating: asking to measure a data transmission rate;
one or more reporting triggering conditions for a data transmission rate;
a reporting event of a data transmission rate, wherein the reporting event comprises at least one of the following: the occurrence of the first event, the completion of the first event, the failure of the first event, and the occurrence of the second event;
a reporting cycle of a data transmission rate;
an eleventh indication, used for indicating: asking to execute at least one of the following third operations: obtaining the first information, and monitoring the first information sent by a first target terminal; and
a time period of executing the third operation.

76. The information control apparatus according to claim 75, wherein the reporting conditions comprise at least one of the following: the rate is zero, the rate reaches any value range among N rate value ranges, and the rate is greater than or equal to M; and
wherein
N is a natural number greater than or equal to 1; and
M is a value of the rate.

77. The information control apparatus according to claim 75 or 76, wherein the executing a seventh operation comprises:
obtaining a first monitoring policy; and
executing the seventh operation according to the first monitoring policy.

78. The information control apparatus according to claim 75, wherein after the step of sending the first monitoring requirement information, and/or sending the second monitoring requirement information, the seventh operation further comprises at least one of the following:
obtaining the first information, second information, and/or related information of an event predicted to occur; and
sending the first information, the second information, and/or the related information of the event predicted to occur.

79. A communication device, comprising a processor, a memory, and a computer program stored on the memory and runnable on the processor, wherein the computer program, when run by the processor, implements the steps of the information control method according to any one of claims 1 to 12, or implements the steps of the information control method according to any one of claims 13 to 19, or implements the steps of the information control method according to any one of claims 20 to 26, or implements the steps of the information control method according to any one of claims 27 to 31, or implements the steps of the information control method according to any one of claims 32 to 35, or implements the steps of the information control method according to any one of claims 36 to 39.

80. A computer-readable storage medium, having a computer program stored thereon, wherein the computer program, when run by a processor, implements the steps of the information control method according to any one of claims 1 to 12, or implements the steps of the information control method according to any one of claims 13 to 19, or implements the steps of the information control method according to any one of claims 20 to 26, or implements the steps of the information control method according to any one of claims 27 to 31, or implements the steps of the information control method according to any one of claims 32 to 35, or implements the steps of the information control method according to any one of claims 36 to 39.
